(19) Europäisches Patentamt
European Patent Office
Office européen des brevets

(11) **EP 3 815 366 B1**

(12) **FASCICULE DE BREVET EUROPEEN**

(45) Date de publication et mention
de la délivrance du brevet:
**15.10.2025 Bulletin 2025/42**

(21) Numéro de dépôt: **19745689.0**

(22) Date de dépôt: **18.06.2019**

(51) Classification Internationale des Brevets (IPC):
*H04N 19/159* (2014.01)   *H04N 19/176* (2014.01)
*H04N 19/147* (2014.01)   *H04N 19/593* (2014.01)
*H04N 19/11* (2014.01)    *H04N 19/124* (2014.01)
*H04N 19/19* (2014.01)

(52) Classification Coopérative des Brevets (CPC):
**H04N 19/147; H04N 19/11; H04N 19/124;
H04N 19/159; H04N 19/176; H04N 19/19;
H04N 19/593;** H04N 19/61

(86) Numéro de dépôt international:
**PCT/FR2019/051478**

(87) Numéro de publication internationale:
**WO 2020/002795 (02.01.2020 Gazette 2020/01)**

(54) **PROCÉDÉS ET DISPOSITIFS DE CODAGE ET DE DÉCODAGE D'UN FLUX DE DONNÉES REPRÉSENTATIF D'AU MOINS UNE IMAGE**

VERFAHREN UND VORRICHTUNGEN ZUR CODIERUNG UND DECODIERUNG EINES DATENSTROMS, DER MINDESTENS EIN BILD REPRÄSENTIERT

METHODS AND DEVICES FOR CODING AND DECODING A DATA STREAM REPRESENTING AT LEAST ONE IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.06.2018  FR 1855791**

(43) Date de publication de la demande:
**05.05.2021 Bulletin 2021/18**

(73) Titulaire: **Orange
92130 Issy-les-Moulineaux (FR)**

(72) Inventeurs:
• **HENRY, Félix
92326 CHÂTILLON CEDEX (FR)**

• **ABDOLI, Mohsen
92326 CHÂTILLON CEDEX (FR)**

(74) Mandataire: **Vidon Brevets & Stratégie
16B, rue de Jouanet
BP 90333
35703 Rennes Cedex 7 (FR)**

(56) Documents cités:
**WO-A1-2007/079964     WO-A1-2015/049491**

• **STANKOWSKI JAKUB ET AL: "Rate-distortion optimized quantization in HEVC: Performance limitations", 2015 PICTURE CODING SYMPOSIUM (PCS), IEEE, 31 May 2015 (2015-05-31), pages 85 - 89, XP033184672, DOI: 10.1109/PCS.2015.7170052**

## Description

### 1. Domaine de l'invention

Le domaine de l'invention est celui du codage et du décodage d'images ou de séquences d'images, et notamment de flux vidéo.

Plus précisément, l'invention concerne la compression d'images ou de séquences d'images utilisant une représentation par blocs des images.

L'invention peut notamment s'appliquer au codage image ou vidéo mis en œuvre dans les codeurs actuels ou à venir (JPEG, MPEG, H.264, HEVC, etc et leurs amendements), et au décodage correspondant.

### 2. Art Antérieur

Les images et séquences d'images numériques occupent beaucoup d'espace en termes de mémoire, ce qui nécessite, lorsque l'on transmet ces images, de les compresser afin d'éviter les problèmes d'encombrement sur le réseau utilisé pour cette transmission.

On connaît déjà de nombreuses techniques de compression de données vidéo. Parmi celles-ci, le standard de compression HEVC ("High Efficiency Video Coding, Coding Tools and Specification", Matthias Wien, Signals and Communication Technology, 2015) propose de mettre en œuvre une prédiction de pixels d'une image courante par rapport à d'autres pixels appartenant à la même image (prédiction intra) ou à une image précédente ou suivante (prédiction inter).

Plus précisément, la prédiction intra exploite les redondances spatiales au sein d'une image. Pour ce faire, les images sont découpées en blocs de pixels. Les blocs de pixels sont alors prédits à l'aide d'informations déjà reconstruites, correspondant aux blocs précédemment codés/décodés dans l'image courante selon l'ordre de parcours des blocs dans l'image.

Par ailleurs, de manière classique, le codage d'un bloc courant est réalisé à l'aide d'une prédiction du bloc courant, dit bloc prédicteur, et d'un résidu de prédiction ou « bloc résiduel », correspondant à une différence entre le bloc courant et le bloc prédicteur. Le bloc résiduel obtenu est alors transformé, par exemple en utilisant une transformée de type DCT (transformée en cosinus discrète). Les coefficients du bloc résiduel transformé sont ensuite quantifiés, puis codés par un codage entropique et transmis au décodeur, qui peut reconstruire le bloc courant en ajoutant ce bloc résiduel au bloc prédicteur.

Le décodage est fait image par image, et pour chaque image, bloc par bloc. Pour chaque bloc, les éléments correspondants du flux sont lus. La quantification inverse et la transformation inverse des coefficients du bloc résiduel sont effectuées. Puis, la prédiction du bloc est calculée pour obtenir le bloc prédicteur, et le bloc courant est reconstruit en ajoutant la prédiction (i.e. le bloc prédicteur) au bloc résiduel décodé.

Dans US9253508, une technique de codage DPCM (pour Differential Pulse Code Modulation en anglais) pour coder des blocs en mode Intra est insérée dans un codeur HEVC. Une telle technique consiste à prédire un ensemble de pixels d'un bloc intra par un autre ensemble de pixels du même bloc qui ont été précédemment reconstruits. Dans US9253508, un ensemble de pixels du bloc intra à coder correspond à une ligne du bloc, ou une colonne ou une ligne et une colonne, et la prédiction intra utilisée pour prédire l'ensemble de pixels est l'une des prédictions intra directionnelles définies dans le standard HEVC.

Une telle technique n'est toutefois pas optimale. En effet, la reconstruction d'un ensemble de pixels du bloc intra correspond soit à l'ajout d'un résidu de prédiction dans le cas d'un codage sans pertes, offrant donc un taux de compression assez faible, soit à l'ajout d'un résidu de prédiction après transformation inverse et/ou quantification inverse dudit autre ensemble de pixels servant de prédiction. Une telle technique ne permet donc pas de prédire chaque pixel du bloc intra à l'aide d'une fonction locale de prédiction et de reconstruire le pixel prédit avant de prédire un pixel suivant. En effet, cette technique nécessite de reconstruire un ensemble de pixels (ligne/colonne du bloc par exemple) pour prédire un autre ensemble de pixels. Autrement dit, à chaque prédiction et reconstruction d'une partie du bloc, plusieurs pixels du bloc sont prédits et reconstruits.

De plus, dans US9253508, il n'est pas décrit comment faire cohabiter des modes de prédiction intra classiques tels que définis dans le standard HEVC par exemple et le mode de prédiction DPCM, ni comment déterminer un pas de quantification pour les blocs codés par une prédiction intra DPCM telle que décrite dans US9253508, qui soit adapté à un mécanisme d'optimisation débit/distorsion visant à minimiser la fonction $D + \lambda R$ où R représente le débit pour coder l'image, D la distorsion associée et $\lambda$ un lagrangien.

Il existe donc un besoin pour une nouvelle méthode de codage et de décodage pour améliorer la compression des données image ou vidéo.

Le document WO 2015/049491 A1 (SONY CORP [JP]; SONY EUROPE LTD [GB]) 9 avril 2015 (2015-04-09), divulgue q'après la prédiction intra/inter, un résidu peut être quantifié dans un domaine transformé ou spatial (mode contournement de transformation). Dans un troisième mode, le résidu peut être décorrélé par un processus MICD. Le mode est signalé dans le train binaire. Pour déterminer les étapes de quantification, une optimisation de distorsion de vitesse est réalisée. Les paramètres QP sont mentionnés. Le document WO 2007/079964 A1 (NARROSCHKE MATTHIAS [DE]; MUSMANN HANS-GEORG [DE]) 19 juillet 2007 (2007-07-19), divulgue la possibilité de contourner la transformation de l'erreur de prédiction signalée au niveau du bloc ou de la tranche. Dans les deux modes, des quantificateurs optimisés pour la distorsion de débit sont trouvés et une QP est signalée. Le document STANKOWSKI JAKUB ET AL: "Rate-distortion optimized quantization in HEVC: Performance limitations", 2015 PICTURE CODING SYMPOSIUM (PCS), IEEE, 31 mai 2015 (2015-05-31), pages 85-89, divulgue d'information d'arrière-plan sur la quantification optimisée en débit-distorsion dans le système HEVC.

## 3. Exposé de l'invention

L'invention vient améliorer l'état de la technique. Elle concerne à cet effet un procédé de décodage d'un flux de données codées selon la revendication 1.

Selon l'invention, il est ainsi possible de définir un premier pas de quantification pour les résidus de prédiction à quantifier/dé-quantifier dans le domaine transformé et un deuxième pas de quantification pour les résidus de prédiction à quantifier/dé-quantifier dans le domaine spatial, les premier et deuxième pas de quantification étant déterminés par un même paramètre de quantification. Ainsi, les premier et deuxième pas de quantification sont liés et peuvent être utilisés conjointement.

Avantageusement, selon l'invention, les pas de quantification utilisés dans les différents modes de codage disponibles pour un bloc courant sont cohérents, notamment pour le mécanisme d'optimisation débit/distorsion appliqué au bloc courant, mais également les pas de quantification sont cohérents entre blocs, notamment pour le mécanisme d'optimisation débit/distorsion appliqué à l'image lorsque certains blocs sont codés selon le premier mode de codage et d'autres blocs sont codés selon le deuxième mode de codage. En effet, si les pas de quantification ne sont pas liés entre eux, l'un des deux pas de quantification peut devenir très grand par rapport à l'autre pas de quantification. Les blocs codés selon le mode de codage utilisant le pas de quantification très grand seraient alors fortement compressés, contrairement aux autres blocs codés selon l'autre mode de codage utilisant le pas de quantification moins grand, ce qui résulterait en une variabilité spatiale importante de la qualité visuelle dans l'image, et donc une moindre qualité visuelle de toute l'image.

Selon l'invention, le premier mode de codage correspond à un codage du bloc dans le domaine transformé. Autrement dit, selon ce premier mode de codage, un résidu de prédiction du bloc courant calculé dans le domaine spatial, i.e. entre le bloc original et un bloc prédit, est transformé, par exemple par une transformation DCT, pour fournir un bloc de coefficients transformés. Ce bloc de coefficients transformés est ensuite quantifié à l'aide du premier pas de quantification.

Le deuxième mode de codage correspond à un codage du bloc dans le domaine spatial. Autrement dit, selon ce deuxième mode de codage, le résidu de prédiction du bloc courant calculé dans le domaine spatial est directement quantifié, sans subir de transformations.

L'invention concerne également un procédé de codage d'un flux de données codées selon la revendication 3.

Selon l'invention, le bloc courant peut être codé/décodé par prédiction intra dite classique (premier mode de codage), par exemple une prédiction spatiale selon l'un quelconque des modes de prédiction définis dans le standard HEVC, ou par une nouvelle prédiction intra (deuxième mode de codage) basée sur l'utilisation de pixels du bloc courant qui ont été précédemment décodés.

Selon cette nouvelle prédiction intra, aussi appelée ILR par la suite (pour In-Loop Residual en anglais), chaque pixel est prédit, puis un résidu est calculé pour le pixel prédit et le résidu est quantifié. Le résidu quantifié est ensuite dé-quantifié, puis ajouté à la prédiction du pixel pour reconstruire la valeur du pixel et obtenir sa valeur décodée. Une telle valeur décodée du pixel peut ensuite être utilisée pour prédire d'autres pixels du bloc courant.

Avantageusement, une telle méthode de prédiction intra permet de prédire des pixels du bloc courant à l'aide de pixels qui sont plus proches spatialement que les pixels de référence utilisés dans la prédiction intra dite classique. La prédiction est ainsi améliorée.

Selon un autre mode particulier de réalisation du procédé de décodage ou du procédé de codage cités ci-dessus, le deuxième pas de quantification est déterminé en fonction du premier pas de quantification.

Selon ce mode particulier de réalisation de l'invention, le paramètre de quantification correspond alors au premier pas de quantification, et les deux pas de quantification dépendent l'un de l'autre.

En variante de ce mode particulier de réalisation, le deuxième pas de quantification est déterminé par $a * \delta_1 + b$ ou $c * \delta_1^2 + d * \delta_1 + e$ , avec $\delta_1$ correspondant au premier pas de quantification, et a, b, c, d, e étant des paramètres prédéterminés.

Selon un autre mode particulier de réalisation du procédé de décodage ou du procédé de codage cités ci-dessus, le premier pas de quantification est obtenu à partir d'une table de pas de quantification prédéterminée pour des valeurs du paramètre de quantification.

Selon un autre mode particulier de réalisation du procédé de décodage ou du procédé de codage cités ci-dessus, le paramètre de quantification correspond à un lagrangien $\lambda$ utilisé pour optimiser une fonction $D + \lambda * R$ où R correspond au débit du flux de données et D correspond à la distorsion associée de l'image décodée.

Selon un autre mode particulier de réalisation du procédé de décodage ou du procédé de codage cités ci-dessus, le paramètre de quantification est codé dans le flux de données ou décodé du flux de données.

Selon un autre mode particulier de réalisation, le décodage du bloc courant selon le deuxième mode de codage comprend en outre:

- le décodage d'un autre résidu de prédiction associé audit bloc courant,

- la dé-quantification dudit autre résidu de prédiction associé audit bloc courant à l'aide dudit premier pas de quantification,
- la reconstruction dudit bloc courant à partir des pixels reconstruits du bloc courant et dudit autre résidu de prédiction dé-quantifié.

Selon ce mode particulier de réalisation de l'invention, lorsque le bloc courant est codé selon le deuxième mode de codage, un deuxième résidu de prédiction est codé/décodé pour le bloc courant à partir de la prédiction obtenue lors du codage du premier résidu de prédiction pixel par pixel. Les caractéristiques additionnelles de ce mode particulier de réalisation correspondent aux étapes de décodage du bloc codé selon le premier mode de codage. Ainsi, il est possible de conserver un codage/décodage similaire pour les deux modes de codage, notamment au niveau du codeur/décodeur entropique, permettant ainsi d'améliorer encore les performances en compression.

L'invention concerne également un dispositif de décodage selon la revendication 11.

Selon un mode particulier de réalisation de l'invention, un tel dispositif de décodage est compris dans un terminal.

L'invention concerne également un dispositif de codage selon la revendication 12.

Selon un mode particulier de réalisation de l'invention, un tel dispositif de codage est compris dans un terminal, ou un serveur.

Le procédé de décodage, respectivement le procédé de codage, selon l'invention peut être mis en œuvre de diverses manières, notamment sous forme câblée ou sous forme logicielle. Selon un mode particulier de réalisation de l'invention, le procédé de décodage, respectivement le procédé de codage, est mis en œuvre par un programme d'ordinateur. L'invention concerne également un programme d'ordinateur comportant des instructions pour la mise en œuvre du procédé de décodage ou du procédé de codage selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage tel qu'une mémoire. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, les supports d'enregistrement peuvent correspondre à un circuit intégré dans lequel le programme est incorporé, le circuit étant adapté pour exécuter ou pour être utilisé dans l'exécution du procédé en question.

4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente des étapes du procédé de codage selon un mode particulier de réalisation de l'invention,
- la figure 2 illustre un exemple de position des blocs voisins d'un bloc courant pour déterminer un mode de prédiction intra selon un mode particulier de réalisation de l'invention,
- la figure 3 illustre un exemple de position des pixels de référence utilisés pour prédire des pixels d'un bloc courant selon un mode particulier de réalisation de l'invention,
- la figure 4 présente des étapes du procédé de décodage selon un mode particulier de réalisation de l'invention,
- la figure 5 illustre un exemple de signal comportant des données codées représentatives d'au moins un bloc d'une image selon un mode particulier de réalisation de l'invention,
- la figure 6 présente la structure simplifiée d'un dispositif de codage adapté pour mettre en œuvre le procédé de codage selon l'un quelconque des modes particuliers de réalisation de l'invention,
- la figure 7 présente la structure simplifiée d'un dispositif de décodage adapté pour mettre en œuvre le procédé de décodage selon l'un quelconque des modes particuliers de réalisation de l'invention.

5. Description d'un mode de réalisation de l'invention

5.1 Principe général

Le principe général de l'invention est de déterminer un premier pas de quantification utilisé pour quantifier des coefficients transformés d'un résidu de prédiction et un deuxième pas de quantification utilisé pour quantifier directement les valeurs d'un résidu de prédiction dans le domaine spatial (i.e. sans transformation), de manière conjointe. Pour cela, les premier et deuxième

pas de quantification dépendant d'un même paramètre de quantification.

Selon différents modes particuliers de réalisation de l'invention, le paramètre de quantification peut correspondre à l'un ou l'autre des premier ou deuxième pas de quantification, ou bien à un paramètre de quantification déterminé par le codeur ou par l'utilisateur, ou encore à un lagrangien utilisé lors de l'optimisation débit/distorsion au codeur.

Le paramètre de quantification peut aussi être codé dans le flux de données et transmis au décodeur.

Lorsque le paramètre de quantification correspond au premier pas de quantification, le deuxième pas de quantification peut être déterminé selon une fonction linéaire ou polynomiale du premier pas de quantification, ou encore une fonction plus générale.

L'invention permet ainsi d'améliorer les performances en compression lorsque des modes de codage différents réalisant respectivement un codage d'un résidu de prédiction avec et sans transformation sont exploités au sein d'un même système de codage/décodage d'images ou de séquence d'images.

5. 2 Exemples de mise en œuvre

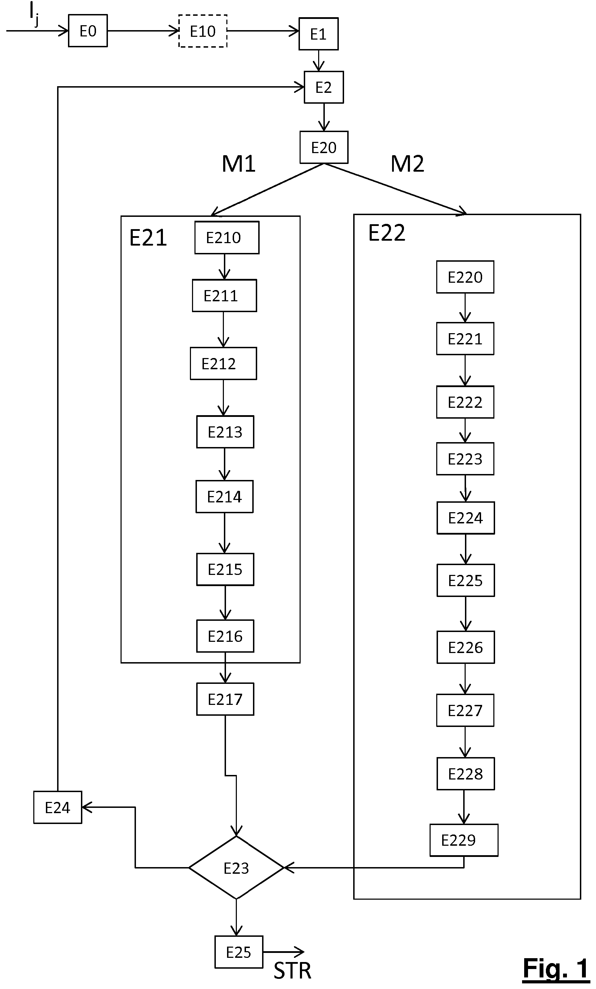

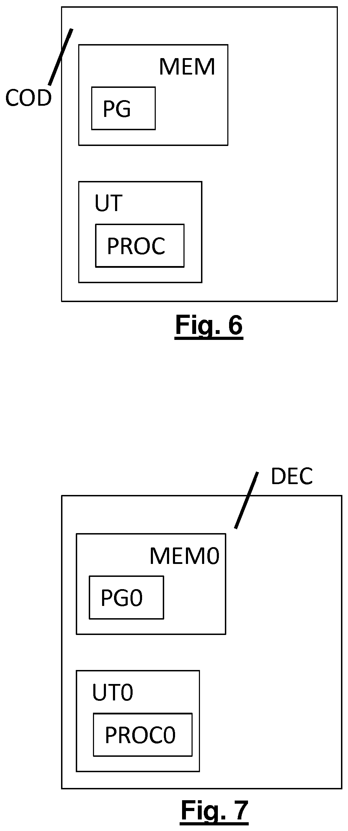

La figure 1 présente des étapes du procédé de codage selon un mode particulier de réalisation de l'invention. Par exemple, on code une séquence d'images $I_1$, $I_2$, ..., $I_{Nb}$ sous la forme d'un flux de données codées STR selon un mode particulier de réalisation de l'invention. Par exemple, un tel procédé de codage est mis en œuvre par un dispositif de codage tel que décrit plus loin en relation avec la figure 6.

Une séquence d'images $I_1$, $I_2$, ..., $I_{Nb}$, Nb étant le nombre d'images de la séquence à coder, est fournie en entrée du procédé de codage. Le procédé de codage délivre en sortie un flux de données codées STR représentatif de la séquence d'images fournie en entrée.

De manière connue, le codage de la séquence d'images $I_1$, $I_2$, ..., $I_{Nb}$ est fait image par image selon un ordre de codage préalablement établi et connu du codeur. Par exemple, les images peuvent être codées dans l'ordre temporel $I_1$, $I_2$, ..., $I_{Nb}$ ou selon un autre ordre, par exemple $I_1$, $I_3$, $I_2$, ..., $I_{Nb}$.

Lors d'une étape E0, une image $I_j$ à coder de la séquence d'images $I_1$, $I_2$, ..., $I_{Nb}$ est découpée en blocs, par exemple en blocs de taille 32x32, ou 64x64 pixels ou plus. Un tel bloc peut être subdivisé en sous-blocs carrés ou rectangulaires, par exemple de taille 16x16, 8x8, 4x4, 16x8, 8x16, ....

Lors d'une étape optionnelle E10, selon un mode particulier de réalisation de l'invention, un paramètre de quantification QP est codé dans le flux de données STR, au niveau des données codées pour l'image $I_j$ ou bien au niveau des données codées pour la séquence d'images.

Puis, lors d'une étape E1, un premier bloc ou sous-bloc $X_b$ à coder de l'image $I_j$ est sélectionné selon un sens de parcours de l'image $I_j$ prédéterminé. Par exemple, il peut s'agir du premier bloc dans l'ordre lexicographique de parcours de l'image.

Lors d'une étape E2, l'encodeur va choisir le mode de codage pour coder le bloc courant $X_b$. Selon le mode particulier de réalisation décrit ici, l'encodeur sélectionne le mode de codage pour coder le bloc courant $X_b$ parmi un premier mode de codage M1 et un deuxième mode de codage M2. Des modes de codage supplémentaires (non décrits ici) peuvent être utilisés.

Selon le mode particulier de réalisation décrit ici, le premier mode de codage M1 correspond au codage du bloc courant par prédiction intra classique, par exemple tel que défini selon le standard HEVC et le deuxième mode de codage M2 correspond au codage par prédiction In Loop Residual (ILR).

Le principe de l'invention peut être étendu à d'autres types de modes de codage, que ce soit pour le premier mode de codage M1 ou le deuxième mode de codage M2. Par exemple, le premier mode de codage peut correspondre à tout type de modes de codage utilisant une transformation du résidu de prédiction avant de quantifier les coefficients issus de la transformation (codage par prédiction inter-images, codage par prédiction spatiale avec template matching, etc...). Le deuxième mode de codage peut correspondre à tout type de modes de codage utilisant une quantification des valeurs du résidu de prédiction dans le domaine spatial, i.e. sans opérer de transformation, par exemple DCT, du résidu de prédiction. Lors de l'étape E2, le codeur peut réaliser une optimisation débit/distorsion pour déterminer le meilleur mode de codage pour coder le bloc courant. Au cours de cette optimisation débit/distorsion, des modes de codage supplémentaires distincts du premier et du deuxième mode de codage peuvent être testés, par exemple un mode de codage en mode inter. Au cours de cette optimisation débit/distorsion, le codeur simule le codage du bloc courant $X_b$ selon les différents modes de codage disponibles afin de déterminer le débit et la distorsion associés à chaque mode de codage et sélectionne le mode de codage offrant le meilleur compromis débit/distorsion, par exemple selon la fonction D+$\lambda$R, où R représente le débit nécessaire pour coder le bloc courant selon le mode de codage évalué, D la distorsion mesurée entre le bloc décodé et le bloc courant original et $\lambda$ un multiplicateur lagrangien, par exemple entré par l'utilisateur ou défini au codeur.

Lors d'une étape E20, une information indiquant le mode de codage sélectionné pour le bloc courant est codée dans le flux de données STR.

Si le bloc courant $X_b$ est codé selon le premier mode de codage M1, le procédé passe à l'étape E21 de codage du bloc selon M1. Si le bloc courant $X_b$ est codé selon le deuxième mode de codage M2, le procédé passe à l'étape E22 de codage du bloc selon M2.

On décrit ci-après l'étape E21 de codage du bloc selon le premier mode de codage M1, selon un mode particulier de réalisation de l'invention. Selon le mode particulier décrit ici, le premier mode de codage correspond à une prédiction intra classique, telle que celle définie dans le standard HEVC.

Lors d'une étape E210, un pas de quantification $\delta_1$ est déterminé. Par exemple, le pas de quantification $\delta_1$ peut être fixé par l'utilisateur, ou bien calculé à l'aide d'un paramètre de quantification fixant un compromis entre compression et qualité et entré par l'utilisateur ou défini par le codeur. Ainsi, un tel paramètre de quantification peut être le paramètre $\lambda$, utilisé dans la fonction de coût débit-distorsion D+ $\lambda$ .R où D représente la distorsion introduite par le codage et R le débit utilisé pour coder. Cette fonction sert à faire des choix de codage, classiquement on cherche la façon de coder l'image qui minimise cette fonction.

En variante, le paramètre de quantification peut être le QP, correspondant au paramètre de quantification utilisé classiquement dans les normes AVC ou HEVC. Ainsi, dans la norme HEVC, le pas de quantification $\delta_1$ est déterminé par l'équation $\delta_1$=levelScale[ QP%6 ] << (QP/6)) où levelScale[ k ] = { 40, 45, 51, 57, 64, 72 } pour k = 0..5. Lors d'une étape E211, une prédiction du bloc courant est déterminée à l'aide d'un mode de prédiction intra classique. Selon cette prédiction intra classique, chaque pixel prédit est calculé uniquement à partir des pixels décodés issus des blocs voisins (pixels de référence) situés au-dessus du bloc courant, et à gauche du bloc courant. La façon dont les pixels sont prédits à partir des pixels de référence dépend d'un mode de prédiction qui est transmis au décodeur, et qui est choisi par le codeur parmi un ensemble prédéterminé de modes connus du codeur et du décodeur.

Ainsi, dans HEVC il y a 35 modes de prédiction possibles : 33 modes qui interpolent les pixels de référence dans 33 directions angulaires différentes, et 2 autres modes: le mode DC dans lequel chaque pixel du bloc prédit est produit à partir de la moyenne des pixels de référence, et le mode PLANAR, qui effectue une interpolation plane et non directionnelle. Cette approche dite « prédiction intra classique » est bien connue et également utilisée dans le standard ITU-T H.264 (où il n'y a que 9 modes différents) ainsi que dans le logiciel expérimental JEM disponible à l'adresse internet (https://jvet.hhi.fraunhofer.de/), où il y a 67 modes de prédiction différents. Dans tous les cas, la prédiction intra classique respecte les deux aspects cités ci-dessus (prédiction des pixels à partir des blocs voisins et transmission au décodeur d'un mode de prédiction optimal).

Au cours de l'étape E211, le codeur choisit donc un des modes de prédiction disponibles parmi la liste prédéterminée de modes de prédiction. Une façon de choisir consiste par exemple à évaluer tous les modes de prédiction et à conserver le mode de prédiction qui minimise une fonction de coût tel que, classiquement, le coût débit-distorsion.

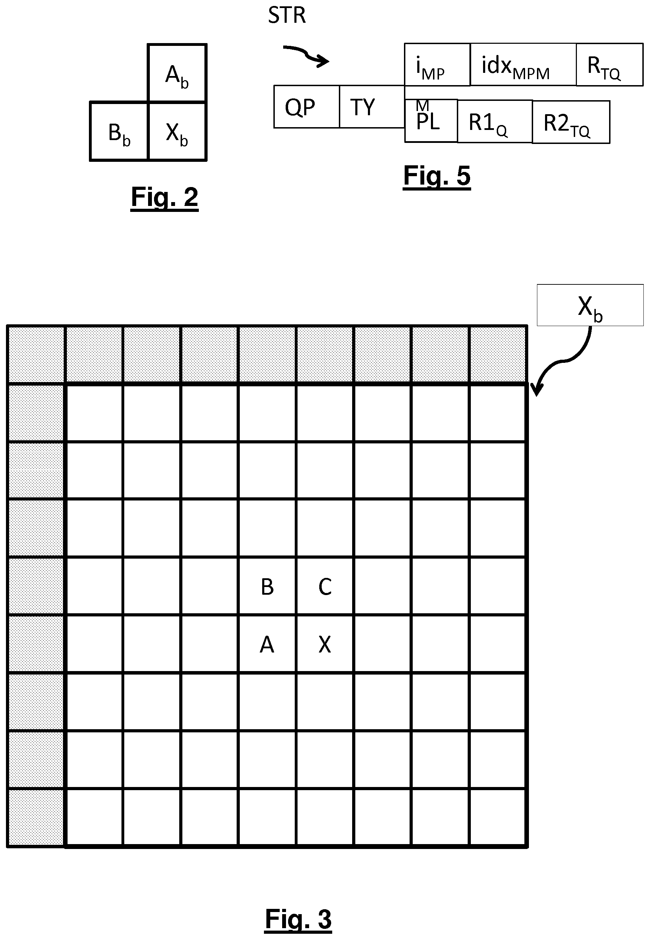

Lors d'une étape E212, le mode de prédiction choisi pour le bloc courant est codé à partir des blocs voisins du bloc courant. La figure 2 illustre un exemple de position des blocs voisins $A_b$ et $B_b$ du bloc courant $X_b$ pour coder le mode de prédiction du bloc courant $X_b$.

Au cours de l'étape E212, le mode de prédiction intra choisi pour le bloc courant est codé en utilisant les modes de prédiction intra associés aux blocs voisins.

Selon une variante du mode particulier de réalisation de l'invention décrit ici, le mode de prédiction intra associé à un bloc est :

- le mode de prédiction intra qui a été utilisé pour prédire le bloc, si le bloc a été codé par un mode de codage par prédiction intra classique,
- le mode de prédiction intra qui a été associé au bloc, si le bloc a été codé par un mode de codage distinct d'une prédiction intra classique. Un exemple d'une telle association est décrite plus loin en référence à l'étape E229.

Ainsi, l'approche décrite dans la norme HEVC pour coder le mode de prédiction du bloc courant peut être utilisée. Dans l'exemple de la figure 2, une telle approche consiste à identifier le mode de prédiction intra $m_A$ associé au bloc $A_b$ situé au-dessus du bloc courant, et le mode de prédiction intra $m_B$ associé au bloc $B_b$ situé juste à gauche du bloc courant. En fonction de la valeur de $m_A$ et de $m_B$, une liste dite MPM (pour Most Probable Mode), contenant 3 modes de prédiction intra, et une liste dite non-MPM, contenant les 32 autres modes de prédiction, sont créées.

Selon la variante de réalisation du mode particulier décrit ici, le mécanisme de création de la liste MPM spécifié selon la norme HEVC est adapté afin de prendre en compte l'association d'un mode de prédiction intra à un bloc lors de son codage, lorsque ce bloc n'est pas codé selon le mode de codage intra classique (étape E229 décrite plus loin). Selon cette variante, un bloc voisin du bloc courant a toujours un mode de prédiction intra qui lui est associé, que ce bloc ait été codé selon un mode de codage intra ou selon un autre mode de codage (ILR, inter, etc....).

Le reste du mécanisme de création de la liste MPM reste similaire à celui spécifié selon la norme HEVC. Si $m_A$ et $m_B$ sont tous deux égaux à un même mode de prédiction intra et que ce mode de prédiction intra est le mode de prédiction DC ou PLANAR, la liste MPM comprend les modes de prédiction suivants: MPM [0]=PLANAR, MPM[1]=DC, MPM[2]=A(26) correspondant au mode de prédiction angulaire à l'index 26 de la table des modes de prédiction intra HEVC.

Si $m_A$ et $m_B$ sont tous deux égaux à un même mode de prédiction angulaire m(n), la liste MPM comprend les modes de prédiction suivants: MPM[0] =m(n), MPM[1]=m(2+(n+29)mod32), MPM[2] =m(2+(n-1)mod32).

Si $m_A$ et $m_B$ sont différents, la liste MPM comprend les modes de prédiction suivants:
MPM[0]= $m_B$, MPM[1]= $m_A$, MPM[2]=Mlast, où Mlast est défini par:

- si $m_B$ n'est pas égal au mode PLANAR et $m_A$ n'est pas égal au mode PLANAR, alors Mlast est égal au mode PLANAR,
- si non, si $m_B$ n'est pas égal au mode DC et $m_A$ n'est pas égal au mode DC, alors Mlast est égal au mode DC,
- sinon Mlast est égal au mode angulaire A(26).

La liste non-MPM comprend tous les autres modes de prédiction intra non compris dans la liste MPM.

Selon une autre variante de réalisation du mode particulier décrit ici, conformément au mécanisme de création de la liste MPM spécifié selon la norme HEVC, si un des blocs voisins $A_b$ ou $B_b$ n'est pas codé selon un mode de prédiction intra, le mode de prédiction DC lui est attribué par défaut. Le reste du mécanisme de création de la liste MPM reste similaire à celui spécifié selon la norme HEVC et décrit ci-dessus.

Selon la norme HEVC, afin de coder le mode de prédiction intra du bloc courant, des éléments de syntaxe sont transmis :

- un indicateur binaire indiquant si le mode de prédiction à coder pour le bloc courant est dans la liste MPM ou non,
- si le mode de prédiction du bloc courant appartient à la liste MPM, un index dans la liste MPM correspondant au mode de prédiction du bloc courant est codé,
- si le mode de prédiction du bloc courant n'appartient pas à la liste MPM, un index dans la liste non-MPM correspondant au mode de prédiction du bloc courant est codé.

Lors d'une étape E213, le résidu de prédiction R pour le bloc courant est construit.

Au cours de l'étape E213, de manière classique, un bloc prédit P est construit en fonction du mode de prédiction choisi à l'étape E211. Puis le résidu de prédiction R est obtenu en calculant la différence pour chaque pixel, entre le bloc prédit P et le bloc courant original.

Lors d'une étape E214, le résidu de prédiction R est transformé en $R_T$.

Au cours de l'étape E214, une transformée fréquentielle est appliquée au bloc de résidu R de façon à produire le bloc $R_T$ comprenant des coefficients transformés. La transformée pourra être une transformée de type DCT par exemple. Il est possible de choisir la transformée à utiliser parmi un ensemble prédéterminé de transformées $E_T$ et de signaler la transformée utilisée au décodeur.

Lors d'une étape E215, le bloc de résidu transformé $R_T$ est quantifié à l'aide par exemple d'une quantification scalaire de pas de quantification $\delta_1$. Ceci produit le bloc de résidu de prédiction transformé quantifié $R_{TQ}$.

Lors d'une étape E216, les coefficients du bloc quantifié $R_{TQ}$ sont codés par un codeur entropique. On peut par exemple utiliser le codage entropique spécifié dans la norme HEVC. Selon la variante de réalisation décrite ici, lors d'une étape E217, le mode de prédiction déterminé à l'étape E211 est associé au bloc courant.

De manière connue, le bloc courant est décodé en dé-quantifiant les coefficients du bloc quantifié $R_{TQ}$, puis en appliquant la transformée inverse aux coefficients dé-quantifiés pour obtenir le résidu de prédiction décodé. La prédiction est ensuite ajoutée au résidu de prédiction décodé afin de reconstruire le bloc courant et d'obtenir sa version décodée. La version décodée du bloc courant peut ensuite être utilisée ultérieurement pour prédire spatialement d'autres blocs voisins de l'image ou bien pour prédire des blocs d'autres images par prédiction inter-images.

On décrit ci-après l'étape E22 de codage du bloc selon le deuxième mode de codage M2, selon un mode particulier de réalisation de l'invention. Selon le mode particulier décrit ici, le deuxième mode de codage correspond à un codage par prédiction ILR.

Au cours d'une étape E220, un prédicteur local PL pour le bloc courant est déterminé. Selon le mode de codage décrit ici, les pixels du bloc courant sont prédits par des pixels précédemment reconstruits d'un bloc voisin du bloc courant ou du bloc courant lui-même.

De préférence, pour prédire, on choisit des pixels qui sont les plus proches possibles du pixel à prédire. Pour cette raison, on parle de prédicteur local. Le prédicteur local PL peut également être assimilé à un mode de prédiction du bloc courant associé au deuxième mode de codage M2. Selon cette interprétation, dans le mode particulier de réalisation décrit ici, le premier mode de codage utilise un premier groupe de modes de prédiction intra, par exemple les modes de prédiction intra définis par le standard HEVC, et le deuxième mode de codage, ici le mode ILR, utilise un deuxième groupe de modes de prédiction distinct du premier groupe de modes de prédiction intra. Selon une variante de réalisation décrite plus loin, une correspondance entre ces deux groupes de modes de prédiction peut être déterminée.

Le prédicteur local PL peut être unique ou il peut être sélectionné parmi un ensemble de prédicteurs locaux prédéterminés (deuxième groupe de modes de prédiction).

Selon une variante de réalisation, 4 prédicteurs locaux sont définis. Ainsi, si on appelle X un pixel courant à prédire du bloc courant, A le pixel situé immédiatement à gauche de X, B le pixel situé immédiatement à gauche et au-dessus de X, C le pixel situé immédiatement au-dessus de X, tel qu'illustré en figure 3 montrant un bloc courant $X_b$. 4 prédicteurs locaux PL1, PL2, PL3, PL4 peuvent être définis comme suit:

$$PL1(X) = \begin{array}{l} \min(A,B) \text{ si } C \geq \max(A,B) \\ \max(A,B) \text{ si } C \leq \min(A,B) \\ A+B-C \text{ sinon} \end{array}$$

$$PL2(X) = A$$

$$PL3(X) = B$$

$$PL4(X) = C$$

où min(A,B) correspond à la fonction retournant la valeur la plus petite entre la valeur de A et la valeur de B et max(A,B) correspond à la fonction retournant la valeur la plus grande entre la valeur de A et la valeur de B.

Au cours de l'étape E220, on détermine quel prédicteur local PL utiliser pour le bloc courant. Autrement dit, le même prédicteur local sera utilisé pour tous les pixels du bloc courant, i.e. la même fonction de prédiction. Pour cela, plusieurs variantes de réalisation sont possibles.

Le codage du bloc courant avec chacun des prédicteurs peut être simulé (de manière similaire à une optimisation pour choisir un mode de codage pour le bloc courant), et le prédicteur local qui optimise une fonction de coût (par exemple, qui minimise la fonction D + $\lambda$.R où R est le débit utilisé pour coder le bloc, D est la distorsion du bloc décodé par rapport au bloc original, et $\lambda$ est un paramètre fixé par l'utilisateur) est sélectionné.

Ou bien, afin de limiter la complexité de la sélection d'un prédicteur local pour le bloc courant, une orientation de la texture des pixels précédemment codés est analysée. Par exemple, les pixels précédemment codés dans le bloc qui sont situés au-dessus ou à gauche du bloc courant sont analysés à l'aide d'un opérateur de type Sobel. S'il est déterminé que:

- l'orientation est horizontale, le prédicteur local PL2 est sélectionné,
- l'orientation est verticale, le prédicteur local PL3 est sélectionné,
- l'orientation est diagonale, le prédicteur local PL4 est sélectionné,
- si aucune orientation ne se dégage, le prédicteur local PL1 est sélectionné.

Un élément de syntaxe est codé dans le flux de données STR pour indiquer au décodeur quel prédicteur local a été utilisé pour prédire le bloc courant.

Au cours d'une étape E221, un pas de quantification $\delta_2$ est déterminé. Selon le mode particulier de réalisation décrit ici, le pas de quantification $\delta_2$ dépend d'un même paramètre de quantification que le pas de quantification $\delta_1$ qui serait déterminé à l'étape E210, si le bloc courant était codé selon le premier mode de codage.

Selon une variante, le pas de quantification $\delta_2$ peut être déterminé en fonction du pas de quantification $\delta_1$. Par exemple, une fonction linéaire ou polynomiale peut être utilisée, telle que $\delta_2 = a_1 * \delta_1. + b_1$, où $a_1$ et $b_1$ sont des entiers ou nombres réels prédéterminés, ou encore $\delta_2 = c_1 * \delta_1^2 + d_1 * \delta_1 + e_1$ ou $c_1$, $d_1$ et $e_1$ sont des entiers ou nombres réels prédéterminés. Par exemple, $a_1 = 2$, $b_1 = 10$, $c_1 = 0.1$, $d_1 = 2$ et $e_1 = 10$. D'autres valeurs sont possibles.

Selon une autre variante, le pas de quantification $\delta_2$ peut être déterminé à partir du paramètre $\lambda$ fixant le compromis entre compression et qualité. Ce paramètre lagrangien $\lambda$ peut être entré par l'utilisateur ou défini par le codeur, de manière similaire à $\delta_1$ ou déterminé à partir du paramètre de quantification QP précédemment évoqué.

Selon une autre variante, le pas de quantification $\delta_2$ peut être fixé directement par l'utilisateur, et c'est alors le pas de quantification $\delta_1$ qui est fonction de $\delta_2$.

Lors d'une étape E222, un résidu de prédiction R1 est calculé pour le bloc courant. Pour cela, une fois le prédicteur local choisi, pour chaque pixel courant du bloc courant:

- le pixel courant X du bloc courant est prédit par le prédicteur local PL sélectionné, à l'aide soit des pixels extérieurs au bloc et déjà reconstruits (et donc disponibles avec leur valeur décodée), soit de pixels précédemment reconstruits dans le bloc courant, soit des deux, afin d'obtenir une valeur prédite PRED. Dans tous les cas le prédicteur PL utilise des pixels précédemment reconstruits. Sur la figure 3, on voit que les pixels du bloc courant situés sur la première ligne et/ou la première colonne du bloc courant utiliseront comme pixels de référence (pour construire la valeur prédite PRED) des pixels extérieurs au bloc et déjà reconstruits (pixels en gris sur la figure 3) et éventuellement des pixels déjà reconstruits du bloc courant. Pour les autres pixels du bloc courant, les pixels de référence utilisés pour construire la valeur prédite PRED sont situés à l'intérieur du bloc courant.
- la différence DIFF entre PRED et X est quantifiée en une valeur Q(X), par un quantificateur scalaire de pas de quantification $\delta_2$, par Q(X) = ScalarQuant(DIFF) = ScalarQuant($\delta_2$, X-PRED), le quantificateur scalaire étant par exemple un quantificateur scalaire au plus proche voisin tel que:

$$ScalarQuant(\Delta, x) = floor\left(\frac{x + \frac{\Delta}{2}}{\Delta}\right).$$

Q(X) est le résidu quantifié associé à X. Il est calculé dans le domaine spatial, i.e. calculé directement à partir de la différence entre la valeur prédite PRED du pixel X et la valeur originale de X. Un tel résidu quantifié Q(X) pour le pixel X est mémorisé dans un bloc de résidu de prédiction quantifié $R1_Q$, qui sera codé ultérieurement.

- la valeur prédite décodée P1(X) de X est calculée en ajoutant à la valeur prédite PRED la valeur dé-quantifiée du résidu quantifié Q(X). La valeur prédite décodée P1(X) de X est ainsi obtenue par P1(X) =

PRED + ScalarDequant($\delta_2$, Q(X)). Par exemple, la fonction inverse de quantification scalaire au plus proche est donnée par: ScalarDequant($\Delta$, $x$) = $\Delta \times x$.

La valeur prédite décodée P1(X) permet ainsi de prédire d'éventuels pixels qui restent à traiter dans le bloc courant. Par ailleurs, le bloc P1 comprenant les valeurs décodées/reconstruites des pixels du bloc courant constitue le prédicteur ILR du bloc courant (par opposition au prédicteur intra classique).

Les sous-étapes décrites ci-dessus sont effectuées pour tous les pixels du bloc courant, dans un ordre de parcours qui assure que les pixels utilisés pour la prédiction choisie parmi PL1,..., PL4 soient disponibles.

Selon une variante de réalisation, l'ordre de parcours du bloc courant est l'ordre lexicographique, i.e. de gauche à droite, et de haut en bas.

Selon une autre variante de réalisation, plusieurs ordres de parcours du bloc courant peuvent être utilisés, par exemple :

- l'ordre lexicographique, ou
- en parcourant la première colonne de haut en bas, puis la colonne juste à sa droite, etc . ou bien,
- en parcourant les diagonales les unes après les autres.

Selon cette autre variante, il est possible de simuler le coût de codage associé à chacun des ordres de parcours et de choisir le meilleur ordre de parcours du bloc courant au sens débit/distorsion, puis de coder pour le bloc courant une information représentative de l'ordre de parcours choisi.

A l'issue de l'étape E222, le bloc de résidu quantifié $R1_Q$ a été déterminé. Ce bloc de résidu quantifié $R1_Q$ doit être codé pour être transmis au décodeur. Le prédicteur P1 du bloc courant a également été déterminé.

Lors d'une étape E223, le bloc de résidu quantifié $R1_Q$ est codé afin de le transmettre au décodeur. Il est possible d'utiliser toute approche connue telle que la méthode décrite dans HEVC pour coder les coefficients quantifiés d'un résidu de prédiction classique. Par exemple, selon une variante de réalisation, les valeurs du bloc de résidu quantifié $R1_Q$ sont codées à l'aide d'un codeur entropique dans le flux de données STR.

Selon un mode particulier de réalisation de l'invention, il est possible de déterminer et coder un résidu de prédiction additionnel R2 à partir du prédicteur ILR obtenu pour le bloc courant. Le codage d'un résidu de prédiction additionnel R2 est toutefois optionnel. Il est possible en effet de simplement coder le bloc courant par sa version prédite P1 et le résidu quantifié $R1_Q$. Afin de coder un résidu de prédiction additionnel R2 pour le bloc courant, les étapes suivantes sont mises en oeuvre.

Lors d'une étape E224, la différence R2 entre le prédicteur P1 et le bloc courant original $X_b$ est calculée afin de constituer un résidu additionnel R2 : R2= $X_b$-P1.

Les étapes suivantes correspondent aux étapes classiques de codage de ce résidu R2.

Lors d'une étape E225, le résidu R2 est transformé à l'aide d'une transformée fréquentielle de façon à produire le bloc de coefficients $R2_T$.

La transformée peut être une transformée de type DCT par exemple. Il est possible de choisir la transformée à utiliser parmi un ensemble prédéterminé de transformées $E_{T2}$ et de signaler la transformée utilisée au décodeur. Dans ce cas, l'ensemble $E_{T2}$ peut être différent de l'ensemble $E_T$, afin de s'adapter aux statistiques particulières du résidu R2.

Lors d'une étape E226, le bloc de coefficients $R2_T$ est quantifié, par exemple à l'aide d'une quantification scalaire de pas de quantification $\delta$. Ceci produit le bloc $R2_{TQ}$.

Le pas de quantification $\delta$ peut être fixé par l'utilisateur. Il peut également être calculé à l'aide d'un autre paramètre $\lambda$ fixant le compromis entre compression et qualité et entré par l'utilisateur ou le codeur. Par exemple, le pas de quantification $\delta$ peut correspondre au pas de quantification $\delta_1$ ou être déterminé de manière similaire à celui-ci.

Lors d'une étape E227, les coefficients du bloc quantifié $R2_{TQ}$ sont alors transmis de façon codée. On peut par exemple utiliser le codage spécifié dans la norme HEVC.

De manière connue, le bloc courant est décodé en dé-quantifiant les coefficients du bloc quantifié $R2_{TQ}$, puis en appliquant la transformée inverse aux coefficients dé-quantifiés pour obtenir le résidu de prédiction décodé. La prédiction P1 est ensuite ajoutée au résidu de prédiction décodé afin de reconstruire le bloc courant et d'obtenir sa version décodée $X_{rec}$. La version décodée $X_{rec}$ du bloc courant peut ensuite être utilisée ultérieurement pour prédire spatialement d'autres blocs voisins de l'image ou bien pour prédire des blocs d'autres images par prédiction inter-images.

Selon un mode particulier de réalisation de l'invention, un mode de prédiction intra classique est déterminé et associé au bloc courant. Pour cela, au cours d'une étape E228, un mode de prédiction intra est déterminé pour le bloc courant parmi la liste des modes de prédiction intra disponibles dans le mode de codage intra classique.

Plusieurs variantes de réalisation sont possibles.

Selon une variante, la liste des modes de prédiction MPM est créée pour le bloc courant selon le mécanisme décrit plus haut pour le codage selon le premier mode de codage M1. Selon cette variante, le mode de prédiction est déterminé comme le premier mode de la liste MPM. Selon une autre variante, le mode de prédiction est prédéterminé, par exemple il peut s'agir d'un mode de prédiction défini par défaut, ou transmis dans le flux de données. Par exemple, le mode de prédiction prédéterminé est le mode PLANAR du standard HEVC.

Selon une autre variante, le mode de prédiction est déterminé comme le mode de prédiction intra qui approxime le mieux le bloc courant décodé $X_{rec}$. Selon cette variante, tous les modes de prédiction sont évalués en mesurant une distorsion entre le bloc courant décodé $X_{rec}$ et le bloc prédit obtenu par le mode de prédiction évalué. Le mode de prédiction intra fournissant la plus petite distorsion est sélectionné.

Selon une autre variante, le mode de prédiction est déterminé comme le mode de prédiction intra qui approxime le mieux le bloc courant prédit P1 obtenu par la prédiction ILR. Selon cette variante, tous les modes de prédiction sont évalués en mesurant une distorsion entre le bloc courant prédit P1 et le bloc prédit obtenu par le mode de prédiction évalué. Le mode de prédiction intra fournissant la plus petite distorsion est sélectionné.

Selon une autre variante, lorsque pour un bloc codé en ILR, il y a plusieurs prédicteurs locaux possibles, le mode de prédiction intra peut être dépendant du prédicteur local choisi pour prédire le bloc courant. Par exemple, une table d'association indique quel mode de prédiction intra doit être associé au bloc courant en fonction du prédicteur local choisi.

Lors d'une étape E229, le mode de prédiction intra déterminé est associé au bloc courant. Il s'agit bien ici d'associer un mode de prédiction intra mais non de le transmettre au décodeur. La méthode qui détermine le mode intra à associer au bloc courant est reproductible au décodeur et ne nécessite la transmission d'aucune information.

Plusieurs variantes de réalisation ont été décrites ci-dessus, mais le codeur et le décodeur doivent bien entendu mettre en œuvre la même variante.

Selon le mode particulier de réalisation décrit ici, le mode de prédiction intra associé au bloc courant pourra ensuite servir à:

- prédire le mode de prédiction intra d'un bloc suivant qui serait codé en mode intra classique, ou
- déterminer, le cas échéant, le mode de prédiction intra à associer à un bloc suivant qui serait codé selon un autre mode de codage distinct du mode de prédiction intra classique. Cet autre mode de codage pourrait être un mode de codage ILR, ou autre (inter, etc ...).

Lors d'une étape E23, il est vérifié si le bloc courant est le dernier bloc de l'image à traiter par le procédé de codage, compte tenu de l'ordre de parcours défini précédemment. Si oui, le procédé passe au codage (étape E25) de l'image suivante de la vidéo le cas échéant. Si non, lors d'une étape E24, le bloc suivant de l'image à traiter est sélectionné selon le parcours de l'image défini précédemment et le procédé de codage passe à l'étape E2, où le bloc sélectionné devient le bloc courant à traiter.

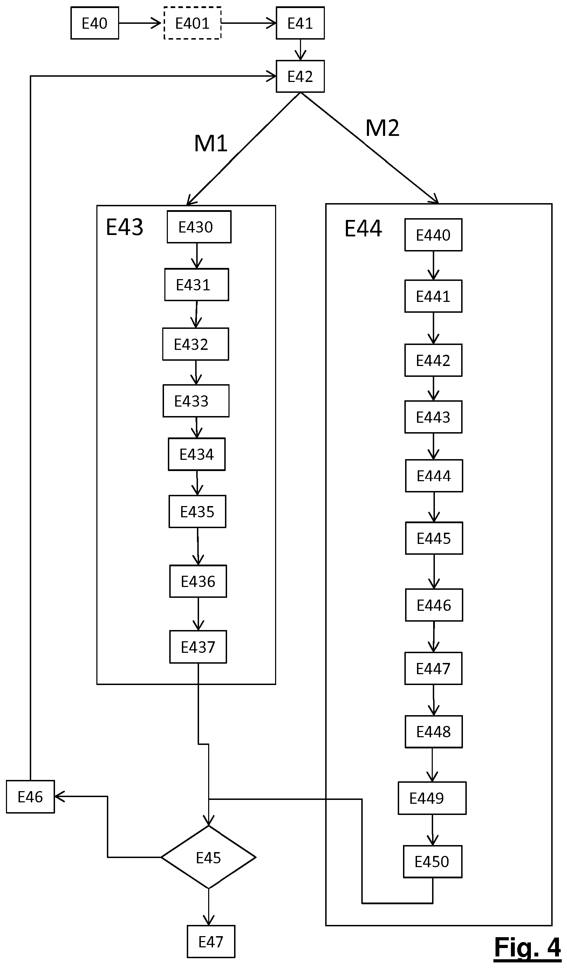

La figure 4 présente des étapes du procédé de décodage d'un flux STR de données codées représentatif d'une séquence d'images $I_1$, $I_2$, ..., $I_{Nb}$ à décoder selon un mode particulier de réalisation de l'invention.

Par exemple, le flux de données STR a été généré via le procédé de codage présenté en relation avec la figure 1. Le flux de données STR est fourni en entrée d'un dispositif de décodage DEC, tel que décrit en relation avec la figure 7.

Le procédé de décodage procède au décodage du flux image par image et chaque image est décodée bloc par bloc.

Lors d'une étape E40, une image $I_j$ à décoder est subdivisée en blocs. Chaque bloc va subir une opération de décodage consistant en une suite d'étapes qui sont détaillées par la suite. Les blocs peuvent être de même taille ou de tailles différentes.

Lors d'une étape optionnelle E401, selon un mode particulier de réalisation de l'invention, un paramètre de quantification QP est lu à partir du flux de données STR.

Lors d'une étape E41, un premier bloc ou sous-bloc $X_b$ à décoder de l'image $I_j$ est sélectionné comme bloc courant selon un sens de parcours de l'image $I_j$ qui est prédéterminé. Par exemple, il peut s'agir du premier bloc dans l'ordre lexicographique de parcours de l'image.

Lors d'une étape E42, une information indiquant un mode de codage pour le bloc courant est lue à partir du flux de données STR. Selon le mode particulier de réalisation décrit ici, cette information indique si le bloc courant est codé selon un premier mode de codage M1 ou selon un deuxième mode de codage M2. Selon le mode particulier de réalisation décrit ici, le premier mode de codage M1 correspond au codage du bloc courant par prédiction intra classique, par exemple tel que défini selon le standard HEVC, et le deuxième mode de codage M2 correspond au codage par prédiction In Loop Residual (ILR).

Dans d'autres modes particuliers de réalisation, l'information lue à partir du flux STR peut également indiquer l'utilisation d'autres modes de codage pour coder le bloc courant (non décrits ici).

On décrit ci-après l'étape E43 de décodage du bloc courant lorsque le bloc courant est codé selon le premier mode de codage M1.

Lors d'une étape E430, un pas de quantification $\delta_1$ est déterminé. Par exemple, le pas de quantification $\delta_1$ est déterminé à partir du paramètre de quantification QP lu lors de l'étape E401 ou de manière similaire à ce qui a été fait au codeur. Par exemple, le pas de quantification $\delta_1$ peut être calculé à l'aide du paramètre de quantification QP lu lors de l'étape E401. Par exemple, le paramètre de quantification QP peut être le paramètre de quantification utilisé classiquement dans les normes AVC ou HEVC. Ainsi, dans la norme HEVC, le pas de quantification $\delta_1$ est déterminé par l'équation $\delta_1$ =levelS-cale[ QP%6 ] << (QP/6)) où levelScale[ k ] = { 40, 45, 51, 57, 64, 72 } pour k = 0..5.

Lors d'une étape E431, le mode de prédiction utilisé pour coder le bloc courant est décodé à partir des blocs voisins. Pour cela, comme ce qui a été fait au codeur, le mode de prédiction intra choisi pour le bloc courant est décodé, en utilisant les modes de prédiction intra associés aux blocs voisins du bloc courant.

Selon une variante du mode particulier de réalisation de l'invention décrit ici, le mode de prédiction intra associé à un bloc est :

- le mode de prédiction intra qui a été utilisé pour prédire le bloc si le bloc a été codé par un mode de codage par prédiction intra classique,
- le mode de prédiction intra qui a été associé au bloc si le bloc a été codé par un mode de codage distinct d'une prédiction intra classique. Un exemple d'une telle association est décrit plus loin en référence aux étapes E449 et E450.

La construction des deux listes MPM et non-MPM est strictement similaire à ce qui a été fait lors du codage. Selon le standard HEVC, des éléments de syntaxe du type suivant sont décodés :

- un indicateur binaire indiquant si le mode de prédiction à coder pour le bloc courant est dans la liste MPM ou non,
- si le mode de prédiction du bloc courant appartient à la liste MPM, un index dans la liste MPM correspondant au mode de prédiction du bloc courant est codé,
- si le mode de prédiction du bloc courant n'appartient pas à la liste MPM, un index dans la liste non-MPM correspondant au mode de prédiction du bloc courant est codé.

L'indicateur binaire et l'index du mode de prédiction sont donc lus pour le bloc courant à partir du flux de données STR, pour décoder le mode de prédiction intra du bloc courant.

Lors d'une étape E432, le décodeur construit un bloc prédit P pour le bloc courant à partir du mode de prédiction décodé.

Lors d'une étape E433, le décodeur décode les coefficients du bloc quantifié $R_{TQ}$ à partir du flux de données STR, par exemple en utilisant le décodage spécifié dans la norme HEVC.

Lors d'une étape E434, le bloc décodé $R_{TQ}$ est dé-quantifié, par exemple à l'aide d'une dé-quantification scalaire de pas de quantification $\delta_1$. Ceci produit le bloc de coefficients dé-quantifiés $R_{TQD}$.

Lors d'une étape E435, une transformée fréquentielle inverse est appliquée au bloc de coefficients dé-quantifiés $R_{TQD}$ de façon à produire le bloc de résidu de prédiction décodé $R_{TQDI}$. La transformée pourra être une transformée de type DCT inverse par exemple. Il est possible de choisir la transformée à utiliser parmi un ensemble prédéterminé de transformées $E_{TI}$ en décodant un indicateur à partir du flux de données STR.

Lors d'une étape E436, le bloc courant est reconstruit à partir du bloc prédit P obtenu à l'étape E432 et le bloc de résidu décodé $R_{TQDI}$ obtenu à l'étape E435, afin de produire le bloc courant décodé $X_{rec}$, par $X_{rec}= P + R_{TQDI}$.

Selon la variante de réalisation décrite ici, lors d'une étape E437, le mode de prédiction intra décodé à l'étape E431 est associé au bloc courant.

On décrit ci-après l'étape E44 de décodage du bloc courant lorsque le bloc courant est codé selon le deuxième mode de codage M2.

Lors d'une étape E440, le prédicteur local PL utilisé pour prédire les pixels du bloc courant est déterminé. Dans le cas où un seul prédicteur est disponible, le prédicteur local est par exemple défini par défaut au niveau du décodeur et aucun élément de syntaxe n'a besoin d'être lu dans le flux STR pour le déterminer.

Dans le cas où plusieurs prédicteurs locaux sont disponibles, par exemple les prédicteurs PL1-PL4 décrits plus haut, un élément de syntaxe est décodé du flux de données STR pour identifier quel prédicteur local a été utilisé pour prédire le bloc courant. Le prédicteur local est donc déterminé à partir de cet élément de syntaxe décodé.

Lors d'une étape E441, le pas de quantification $\delta_2$ est déterminé, de manière similaire à ce qui a été fait au codeur.

Lors d'une étape E442, le résidu quantifié $R1_Q$ est décodé à partir du flux de données STR. Il est possible d'utiliser toute approche connue telle que la méthode décrite dans HEVC pour décoder les coefficients quantifiés du résidu de prédiction classique.

Lors d'une étape E443, le bloc résidu quantifié $R1_Q$ est dé-quantifié à l'aide du pas de quantification $\delta_2$, de façon à produire le bloc de résidu dé-quantifié $R1_{QD}$.

Lors d'une étape E444, lorsque le bloc de résidu dé-quantifié $R1_{QD}$ est obtenu, le bloc prédit P1 est construit à l'aide du prédicteur local PL déterminé lors de l'étape E440.

Au cours de l'étape E444, chaque pixel du bloc courant est prédit et reconstruit de la manière suivante:

- le pixel courant X du bloc courant est prédit par le prédicteur PL sélectionné, à l'aide soit des pixels extérieurs au bloc et déjà décodés, soit de pixels précédemment reconstruits du bloc courant, soit des deux, afin d'obtenir une valeur prédite PRED. Dans tous les cas, le prédicteur PL utilise des pixels précédemment décodés.
- la valeur prédite décodée P1(X) du pixel courant X est calculée en ajoutant à la valeur prédite PRED, la valeur dé-quantifiée du résidu de prédiction $R1_{QD}$, tel que $P1(X) = PRED + R1_{QD}(X)$.

Ces étapes sont mises en oeuvre pour tous les pixels du bloc courant, dans un ordre de parcours qui assure que les pixels utilisés pour la prédiction choisie parmi PL1,... ,PL4 soient disponibles.

Par exemple, l'ordre de parcours est l'ordre lexicographique (de gauche à droite, puis les lignes de haut en bas).

Selon un mode particulier de réalisation de l'invention, le bloc prédit P1 comprenant les valeurs prédites décodées P1(X) de chaque pixel du bloc courant constitue ici le bloc courant décodé $X_{rec}$.

Selon un autre mode particulier de réalisation de l'invention, on considère ici qu'un résidu de prédiction additionnel a été codé pour le bloc courant. Il est donc nécessaire de décoder ce résidu de prédiction additionnel afin de reconstruire la version décodée du bloc courant $X_{rec}$.

Par exemple, cet autre mode particulier de réalisation peut être activé ou non par défaut au niveau du codeur et du décodeur. Ou bien, un indicateur peut être codé dans le flux de données avec les informations de niveau bloc pour indiquer pour chaque bloc codé selon le mode de codage ILR si un résidu de prédiction additionnel est codé. Ou bien encore un indicateur peut être codé dans le flux de données avec les informations de niveau image ou séquence d'images pour indiquer pour tous les blocs de l'image ou de la séquence d'images codés selon le mode de codage ILR si un résidu de prédiction additionnel est codé.

Lorsqu'un résidu de prédiction additionnel est codé pour le bloc courant, lors d'une étape E445, les coefficients du résidu de prédiction quantifié $R2_{TQ}$ sont décodés du flux de données STR, à l'aide de moyens adaptés à ceux mis en œuvre au codeur, par exemple les moyens mis en œuvre dans un décodeur HEVC.

Lors d'une étape E446, le bloc de coefficients quantifiés $R2_{TQ}$ est dé-quantifié, par exemple à l'aide d'une dé-quantification scalaire de pas de quantification $\delta_1$. Ceci produit le bloc de coefficients dé-quantifiés $R2_{TQD}$.

Lors d'une étape E447, une transformée fréquentielle inverse est appliquée au bloc $R2_{TQD}$ de façon à produire le bloc de résidu de prédiction décodé $R2_{TQDI}$.

La transformée inverse pourra être une transformée de type DCT inverse par exemple.

Il est possible de choisir la transformée à utiliser parmi un ensemble prédéterminé de transformées $E_{T2}$ et de décoder l'information signalant la transformée à utiliser au décodeur. Dans ce cas, l'ensemble $E_{T2}$ est différent de l'ensemble $E_T$, afin de s'adapter aux statistiques particulières du résidu R2.

Lors d'une étape E448, le bloc courant est reconstruit en ajoutant le bloc prédit P1 obtenu lors de l'étape E444 au résidu de prédiction décodé $R2_{TQDI}$.

Selon un mode particulier de réalisation de l'invention, un mode de prédiction intra classique est déterminé et associé au bloc courant. Pour cela, au cours d'une étape E449, un mode de prédiction intra est déterminé pour le bloc courant parmi la liste des modes de prédiction intra disponibles dans le mode de codage intra classique. Cette détermination est mise en œuvre de manière similaire à ce qui a été mis en œuvre au niveau du codeur.

Lors d'une étape E450, le mode de prédiction intra déterminé est associé au bloc courant.

Lors d'une étape E45, il est vérifié si le bloc courant est le dernier bloc de l'image à traiter par le procédé de décodage, compte tenu de l'ordre de parcours défini précédemment. Si oui, le procédé passe au décodage (étape E47) de l'image suivante de la vidéo le cas échéant. Si non, lors d'une étape E46, le bloc suivant de l'image à traiter est sélectionné selon le parcours de l'image défini précédemment et le procédé de décodage passe à l'étape E42, le bloc sélectionné devenant le bloc courant à traiter.

La figure 5 illustre un exemple de signal STR comportant des données codées représentatives d'au moins un bloc d'une image selon un mode particulier de réalisation de l'invention. Par exemple, le signal STR peut comprendre un paramètre de quantification QP permettant de déterminer le pas de quantification $\delta_1$ et le pas de quantification $\delta_2$ décrits plus haut. Ce paramètre de quantification QP peut être codé au niveau du bloc, ou au niveau image ou séquence d'images dans le cas du codage d'une vidéo.

Le signal STR comprend un indicateur codé TY indiquant pour un bloc d'une image, un mode de codage pour ce bloc. Lorsque l'indicateur TY indique que le bloc est codé selon le deuxième mode de codage, ici le mode ILR, le signal comprend alors des valeurs codées de résidus de prédiction quantifiés $R1_Q$ et éventuellement des valeurs codées de résidus de prédiction transformés quantifiés $R2_{TQ}$. Lorsque plusieurs prédicteurs locaux sont possibles pour le bloc courant, le signal comprend également un indicateur codé de prédicteur local PL.

Lorsque l'indicateur TY indique que le bloc est codé selon le premier mode de codage, ici le mode de prédiction intra classique, le signal comprend alors des valeurs codées de résidus de prédiction transformés quantifiés $R_{TQ}$, un indicateur binaire $i_{MPM}$ indiquant si le mode de prédiction à coder pour le bloc courant est dans la liste MPM ou non, et un index $idx_{MPM}$ indiquant l'index du mode de prédiction du bloc courant dans la liste correspondante.

La figure 6 présente la structure simplifiée d'un dispositif de codage COD adapté pour mettre en œuvre le procédé de codage selon l'un quelconque des modes particuliers de réalisation de l'invention.

Selon un mode particulier de réalisation de l'invention, les étapes du procédé de codage sont mises en œuvre par des instructions de programme d'ordinateur. Pour cela, le dispositif de codage COD a l'architecture classique d'un ordinateur et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en œuvre les étapes du procédé de codage tel que décrit ci-dessus, lorsque le programme est exécuté par le processeur PROC.

A l'initialisation, les instructions de code du programme d'ordinateur PG sont par exemple chargées dans une mémoire RAM (non représentée) avant d'être exécutées par le processeur PROC. Le processeur PROC de l'unité de traitement UT met notamment en œuvre les étapes du proc édé de codage décrit ci-dessus, selon les instructions du programme d'ordinateur PG. La figure 7 présente la structure simplifiée d'un dispositif de décodage DEC adapté pour mettre en œuvre le procédé de décodage selon l'un quelconque des modes particuliers de réalisation de l'invention.

Selon un mode particulier de réalisation de l'invention, le dispositif de décodage DEC a l'architecture classique d'un ordinateur et comprend notamment une mémoire MEM0, une unité de traitement UT0, équipée par exemple d'un processeur PROC0, et pilotée par le programme d'ordinateur PG0 stocké en mémoire MEM0. Le programme d'ordinateur PG0 comprend des instructions pour mettre en œuvre les étapes du procédé de décodage tel que décrit ci-dessus, lorsque le programme est exécuté par le processeur PROC0.

A l'initialisation, les instructions de code du programme d'ordinateur PG0 sont par exemple chargées dans une mémoire RAM (non représentée) avant d'être exécutées par le processeur PROC0. Le processeur PROC0 de l'unité de traitement UT0 met notamment en œuvre les étapes du procédé de décodage décrit ci-dessus, selon les instructions du programme d'ordinateur PG0.

## Revendications

1. Procédé de décodage d'un flux de données codées représentatif d'au moins une image, ladite image étant découpée en blocs, le procédé de décodage comprend, pour au moins un bloc de l'image, dit bloc courant :

   - le décodage (E42) d'une information indiquant un mode de codage du bloc courant, dans lequel un résidu de prédiction associé audit bloc courant et résultant d'une prédiction spatiale est, selon un premier mode de codage, transformé pour fournir un bloc de coefficients transformés, ledit bloc de coefficients transformés étant ensuite quantifié et, selon un deuxième mode de codage, directement quantifié sans subir de transformation,
   - lorsque le mode de codage du bloc courant correspond audit premier mode de codage, le décodage (E43) du bloc courant comprenant la détermination (E430) d'un premier pas de quantification pour dé-quantifier, dans le domaine transformé, ledit résidu de prédiction associé au bloc courant,
   - lorsque le mode de codage du bloc courant correspond audit deuxième mode de codage, le décodage (E44) du bloc courant comprenant la détermination (E441) d'un deuxième pas de quantification pour dé-quantifier, dans le domaine spatial, ledit résidu de prédiction associé au bloc courant,
   - le premier pas de quantification et le deuxième pas de quantification étant déterminés en fonction d'un même paramètre de quantification, et

   dans lequel lorsque le mode de codage du bloc courant correspond au deuxième mode de codage, le décodage du bloc courant comprend en outre, la détermination d'un prédicteur local et pour chaque pixel du bloc courant :

   - l'obtention d'une prédiction dudit pixel à partir dudit prédicteur local et d'un autre pixel précédemment décodé, ledit autre pixel précédemment décodé appartenant audit bloc courant ou à un bloc de l'image voisin dudit bloc courant et précédemment décodé, lorsque ledit pixel prédit est situé sur la première ligne et/ou la première colonne dudit bloc courant, ledit autre pixel précédemment décodé appartient à un bloc de l'image voisin dudit bloc courant et précédemment décodé, et sinon ledit autre pixel précédemment décodé appartient audit bloc courant,
   - le décodage d'un résidu de prédiction associé audit pixel,
   - la dé-quantification dudit résidu de prédiction associé audit pixel à l'aide dudit deuxième pas de quantification,
   - la reconstruction dudit pixel par ajout de la prédiction dudit pixel au résidu de prédiction dé-quantifié.

2. Procédé de décodage selon la revendication 1, dans lequel les coefficients du résidu de prédiction associé au bloc courant, lorsque le mode de codage du bloc courant correspond au deuxième mode de codage, sont décodés par un décodeur entropique, lequel a été utilisé pour décoder les coefficients du résidu de prédiction associé au bloc courant, lorsque le mode de codage du bloc courant correspond au premier mode de codage.

3. Procédé de codage d'un flux de données codées représentatif d'au moins une image, ladite image étant découpée en blocs, le procédé de codage comprend, pour au moins un bloc de l'image, dit bloc courant :

   - le codage (E20) d'une information indiquant un mode de codage du bloc courant, dans lequel un résidu de prédiction associé audit bloc courant et résultant d'une prédiction spatiale est, selon un premier mode de codage, transformé pour fournir un bloc de coefficients transformés, ledit bloc de coefficients transformés étant ensuite quantifié et, selon un deuxième mode de codage, directement quantifié sans subir de transformation,

- lorsque le mode de codage du bloc courant correspond audit premier mode de codage, le codage (E21) du bloc courant comprenant la détermination (E210) d'un premier pas de quantification pour quantifier ledit résidu de prédiction associé au bloc courant dans le domaine transformé,

- lorsque le mode de codage du bloc courant correspond audit deuxième mode de codage, le codage (E22) du bloc courant comprenant la détermination (E221) d'un deuxième pas de quantification pour quantifier ledit résidu de prédiction associé au bloc courant dans le domaine spatial,

- le premier pas de quantification et le deuxième pas de quantification étant déterminés en fonction d'un même paramètre de quantification, et

dans lequel lorsque le mode de codage du bloc courant correspond au deuxième mode de codage, le codage du bloc courant comprend la détermination d'un prédicteur local et pour chaque pixel du bloc courant :

- l'obtention d'une prédiction dudit pixel à partir dudit prédicteur local et d'un autre pixel précédemment décodé, ledit autre pixel précédemment décodé appartenant audit bloc courant, ou à un bloc de l'image voisin dudit bloc courant et précédemment décodé, lorsque ledit pixel prédit est situé sur la première ligne et/ou la première colonne dudit bloc courant, ledit autre pixel précédemment décodé appartient à un bloc de l'image voisin dudit bloc courant et précédemment décodé, et sinon ledit autre pixel précédemment décodé appartient audit bloc courant,

- l'obtention d'un résidu de prédiction associé audit pixel à partir de la prédiction dudit pixel,

- la quantification dudit résidu de prédiction associé audit pixel à l'aide dudit deuxième pas de quantification,

- le codage dudit résidu de prédiction quantifié.

**4.** Procédé de codage selon la revendication 3, dans lequel les coefficients du résidu de prédiction associé au bloc courant, lorsque le mode de codage du bloc courant correspond au deuxième mode de codage, sont codés par un codeur entropique, lequel a été utilisé pour coder les coefficients du résidu de prédiction associé au bloc courant, lorsque le mode de codage du bloc courant correspond au premier mode de codage.

**5.** Procédé selon l'une quelconque des revendications 1 à 4, dans lequel le deuxième pas de quantification est déterminé en fonction du premier pas de quantification.

cation.

**6.** Procédé selon la revendication 5, dans lequel le deuxième pas de quantification est déterminé par $a * \delta_1 + b$ ou $c * \delta_1^2 + d * \delta_1 + e$, avec $\delta_1$ correspondant au premier pas de quantification, et a, b, c, d, e étant des paramètres prédéterminés.

**7.** Procédé selon l'une quelconque des revendications 1 à 4, dans lequel le premier pas de quantification est obtenu à partir d'une table de pas de quantification prédéterminée pour des valeurs du paramètre de quantification.

**8.** Procédé selon l'une quelconque des revendications 1 à 4, dans lequel le paramètre de quantification correspond à un lagrangien $\lambda$ utilisé pour optimiser une fonction D + 2 * R où R correspond au débit du flux de données et D correspond à la distorsion associée de l'image décodée.

**9.** Procédé selon l'une quelconque des revendications 1 à 4, dans lequel le paramètre de quantification est codé dans le flux de données ou décodé du flux de données.

**10.** Procédé de décodage selon l'une quelconque des revendications 1 à 2, dans lequel le décodage du bloc courant selon le deuxième mode de codage comprend en outre:

- le décodage d'un autre résidu de prédiction associé audit bloc courant,

- la dé-quantification dudit autre résidu de prédiction associé audit bloc courant à l'aide dudit premier pas de quantification,

- la reconstruction dudit bloc courant à partir des pixels reconstruits du bloc courant et dudit autre résidu de prédiction dé-quantifié.

**11.** Dispositif de décodage d'un flux de données codées représentatif d'au moins une image, ladite image étant découpée en blocs, le dispositif de décodage comprend un processeur (PROCO) configuré pour, pour au moins un bloc de l'image, dit bloc courant :

- décoder une information indiquant un mode de codage du bloc courant, dans lequel un résidu de prédiction associé audit bloc courant et résultant d'une prédiction spatiale est, selon un premier mode de codage, transformé pour fournir un bloc de coefficients transformés, ledit bloc de coefficients transformés étant ensuite quantifié et, selon un deuxième mode de codage, directement quantifié sans subir de transformation,

- lorsque le mode de codage du bloc courant correspond audit premier mode de codage, décoder le bloc courant via la détermination d'un premier pas de quantification pour dé-quantifier, dans le domaine transformé, ledit résidu de prédiction associé au bloc courant,

- lorsque le mode de codage du bloc courant correspond audit deuxième mode de codage, décoder le bloc courant via la détermination d'un deuxième pas de quantification pour dé-quantifier, dans le domaine spatial, ledit résidu de prédiction associé au bloc courant,

- le premier pas de quantification et le deuxième pas de quantification étant déterminés en fonction d'un même paramètre de quantification, et

dans lequel lorsque le mode de codage du bloc courant correspond au deuxième mode de codage, lors du décodage du bloc courant, le processeur est en outre configuré pour déterminer un prédicteur local et, pour chaque pixel du bloc courant, pour :

- obtenir une prédiction dudit pixel à partir dudit prédicteur local et d'un autre pixel précédemment décodé, ledit autre pixel précédemment décodé appartenant audit bloc courant ou à un bloc de l'image voisin dudit bloc courant et précédemment décodé, lorsque ledit pixel prédit est situé sur la première ligne et/ou la première colonne dudit bloc courant, ledit autre pixel précédemment décodé appartient à un bloc de l'image voisin dudit bloc courant et précédemment décodé, et sinon ledit autre pixel précédemment décodé appartient audit bloc courant,
- décodé un résidu de prédiction associé audit pixel,
- dé-quantifier ledit résidu de prédiction associé audit pixel à l'aide dudit deuxième pas de quantification,
- reconstruire ledit pixel par ajout de la prédiction dudit pixel au résidu de prédiction dé-quantifié.

12. Dispositif de codage d'un flux de données codées représentatif d'au moins une image, ladite image étant découpée en blocs, le dispositif de codage comprend un processeur (PROC) configuré pour, pour au moins un bloc de l'image, dit bloc courant :

- coder une information indiquant un mode de codage du bloc courant, dans lequel un résidu de prédiction associé audit bloc courant et résultant d'une prédiction spatiale est, selon un premier mode de codage, transformé pour fournir un bloc de coefficients transformés, ledit bloc de coefficients transformés étant ensuite quantifié et, selon un deuxième mode de codage, directement quantifié sans subir de transformation,
- lorsque le mode de codage du bloc courant correspond audit premier mode de codage, coder le bloc courant via la détermination d'un premier pas de quantification pour quantifier ledit résidu de prédiction associé au bloc courant dans le domaine transformé,

- lorsque le mode de codage du bloc courant correspond audit deuxième mode de codage, coder le bloc courant via la détermination d'un deuxième pas de quantification pour quantifier ledit résidu de prédiction associé au bloc courant dans le domaine spatial,

- le premier pas de quantification et le deuxième pas de quantification étant déterminés en fonction d'un même paramètre de quantification, et

dans lequel lorsque le mode de codage du bloc courant correspond au deuxième mode de codage, lors du codage du bloc courant, le processeur est en outre configuré pour déterminer un prédicteur local et pour chaque pixel du bloc courant, pour :

- obtenir une prédiction dudit pixel à partir dudit prédicteur local et d'un autre pixel précédemment décodé, ledit autre pixel précédemment décodé appartenant audit bloc courant, ou à un bloc de l'image voisin dudit bloc courant et précédemment décodé, lorsque ledit pixel prédit est situé sur la première ligne et/ou la première colonne dudit bloc courant, ledit autre pixel précédemment décodé appartient à un bloc de l'image voisin dudit bloc courant et précédemment décodé, et sinon ledit autre pixel précédemment décodé appartient audit bloc courant,
- obtenir un résidu de prédiction associé audit pixel à partir de la prédiction dudit pixel,
- quantifier ledit résidu de prédiction associé audit pixel à l'aide dudit deuxième pas de quantification,
- coder ledit résidu de prédiction quantifié.

13. Programme d'ordinateur comportant des instructions pour la mise en œuvre du procédé de décodage selon l'une quelconque des revendications 1-2 ou 5 à 10 ou du procédé de codage selon l'une quelconque des revendications 3 à 9, lorsque ledit programme est exécuté par un processeur.


**Patentansprüche**

1. Verfahren zur Decodierung eines Stroms codierter Daten, der für mindestens ein Bild repräsentativ ist, wobei das Bild in Blöcke unterteilt ist, wobei das Verfahren zur Decodierung für mindestens einen Block des Bildes, aktueller Block genannt, umfasst:

- die Decodierung (E42) einer Information, die einen Codiermodus des aktuellen Blocks angibt, wobei ein Prädiktionsrest, der dem aktuellen Block zugeordnet ist und aus einer räumlichen Prädiktion resultiert, gemäß einem ersten Codiermodus transformiert wird, um einen Block von transformierten Koeffizienten zu liefern, wobei der Block von transformierten Koeffizienten anschließend quantisiert wird, und gemäß einem zweiten Codiermodus direkt quantisiert wird, ohne eine Transformation zu erfahren,

- wenn der Codiermodus des aktuellen Blocks dem ersten Codiermodus entspricht, die Decodierung (E43) des aktuellen Blocks, welche die Bestimmung (E430) eines ersten Quantisierungsschrittes umfasst, um den Prädiktionsrest, der dem aktuellen Block zugeordnet ist, in der transformierten Domäne zu dequantisieren,

- wenn der Codiermodus des aktuellen Blocks dem zweiten Codiermodus entspricht, die Decodierung (E44) des aktuellen Blocks, welche die Bestimmung (E441) eines zweiten Quantisierungsschrittes umfasst, um den Prädiktionsrest, der dem aktuellen Block zugeordnet ist, in der räumlichen Domäne zu dequantisieren,

- wobei der erste Quantisierungsschritt und der zweite Quantisierungsschritt in Abhängigkeit von demselben Quantisierungsparameter bestimmt werden, und

wobei, wenn der Codiermodus des aktuellen Blocks dem zweiten Codiermodus entspricht, die Decodierung des aktuellen Blocks außerdem die Bestimmung eines lokalen Prädiktors umfasst, und für jedes Pixel des aktuellen Blocks:

- die Gewinnung einer Prädiktion des Pixels aus dem lokalen Prädiktor und aus einem zuvor decodierten anderen Pixel, wobei dieses zuvor decodierte andere Pixel dem aktuellen Block oder einem dem aktuellen Block benachbarten und zuvor decodierten Block des Bildes angehört, wenn sich das prädizierte Pixel auf der ersten Zeile und/oder der ersten Spalte des aktuellen Blocks befindet, das zuvor decodierte andere Pixel einem dem aktuellen Block benachbarten und zuvor decodierten Block des Bildes angehört, und andernfalls das zuvor decodierte andere Pixel dem aktuellen Block angehört,

- die Decodierung eines Prädiktionsrestes, der dem Pixel zugeordnet ist,

- die Dequantisierung des Prädiktionsrestes, der dem Pixel zugeordnet ist, mithilfe des zweiten Quantisierungsschrittes,

- die Rekonstruktion des Pixels durch Hinzufügung der Prädiktion des Pixels zu dem dequantisierten Prädiktionsrest.

2. Verfahren zur Decodierung nach Anspruch 1, wobei die Koeffizienten des Prädiktionsrestes, der dem aktuellen Block zugeordnet ist, wenn der Codiermodus des aktuellen Blocks dem zweiten Codiermodus entspricht, durch einen entropischen Decoder decodiert werden, welcher zum Decodieren der Koeffizienten des Prädiktionsrestes, der dem aktuellen Block zugeordnet ist, verwendet worden ist, wenn der Codiermodus des aktuellen Blocks dem ersten Codiermodus entspricht.

3. Verfahren zur Codierung eines Stroms codierter Daten, der für mindestens ein Bild repräsentativ ist, wobei das Bild in Blöcke unterteilt ist, wobei das Verfahren zur Codierung für mindestens einen Block des Bildes, aktueller Block genannt, umfasst:

- die Codierung (E20) einer Information, die einen Codiermodus des aktuellen Blocks angibt, wobei ein Prädiktionsrest, der dem aktuellen Block zugeordnet ist und aus einer räumlichen Prädiktion resultiert, gemäß einem ersten Codiermodus transformiert wird, um einen Block von transformierten Koeffizienten zu liefern, wobei der Block von transformierten Koeffizienten anschließend quantisiert wird, und gemäß einem zweiten Codiermodus direkt quantisiert wird, ohne eine Transformation zu erfahren,

- wenn der Codiermodus des aktuellen Blocks dem ersten Codiermodus entspricht, die Codierung (E21) des aktuellen Blocks, welche die Bestimmung (E210) eines ersten Quantisierungsschrittes umfasst, um den Prädiktionsrest, der dem aktuellen Block zugeordnet ist, in der transformierten Domäne zu quantisieren,

- wenn der Codiermodus des aktuellen Blocks dem zweiten Codiermodus entspricht, die Codierung (E22) des aktuellen Blocks, welche die Bestimmung (E221) eines zweiten Quantisierungsschrittes umfasst, um den Prädiktionsrest, der dem aktuellen Block zugeordnet ist, in der räumlichen Domäne zu quantisieren,

- wobei der erste Quantisierungsschritt und der zweite Quantisierungsschritt in Abhängigkeit von demselben Quantisierungsparameter bestimmt werden, und

wobei, wenn der Codiermodus des aktuellen Blocks dem zweiten Codiermodus entspricht, die Codierung des aktuellen Blocks die Bestimmung eines lokalen Prädiktors umfasst, und für jedes Pixel des aktuellen Blocks:

- die Gewinnung einer Prädiktion des Pixels aus dem lokalen Prädiktor und aus einem zuvor decodierten anderen Pixel, wobei dieses zuvor decodierte andere Pixel dem aktuellen Block oder einem dem aktuellen Block benachbarten und zuvor decodierten Block des Bildes angehört, wenn sich das prädizierte Pixel auf der ersten Zeile und/oder der ersten Spalte des aktuellen Blocks befindet, das zuvor decodierte andere Pixel einem dem aktuellen Block benachbarten und zuvor decodierten Block des Bildes angehört, und andernfalls das zuvor decodierte andere Pixel dem aktuellen Block angehört,

- die Gewinnung eines Prädiktionsrestes, der dem Pixel zugeordnet ist, aus der Prädiktion des Pixels
- die Quantisierung des Prädiktionsrestes, der dem Pixel zugeordnet ist, mithilfe des zweiten Quantisierungsschrittes,
- die Codierung des quantisierten Prädiktionsrestes.

4. Verfahren zur Codierung nach Anspruch 3, wobei die Koeffizienten des Prädiktionsrestes, der dem aktuellen Block zugeordnet ist, wenn der Codiermodus des aktuellen Blocks dem zweiten Codiermodus entspricht, durch einen entropischen Encoder codiert werden, welcher zum Codieren der Koeffizienten des Prädiktionsrestes, der dem aktuellen Block zugeordnet ist, verwendet worden ist, wenn der Codiermodus des aktuellen Blocks dem ersten Codiermodus entspricht.

5. Verfahren nach einem der Ansprüche 1 bis 4, wobei der zweite Quantisierungsschritt in Abhängigkeit vom ersten Quantisierungsschritt bestimmt wird.

6. Verfahren nach Anspruch 5, wobei der zweite Quantisierungsschritt durch $a * \delta_1 + b$ oder $c * \delta_1^2 + d * \delta_1 + e$ bestimmt wird, wobei $\delta_1$ dem ersten Quantisierungsschritt entspricht und a, b, c, d, e vorbestimmte Parameter sind.

7. Verfahren nach einem der Ansprüche 1 bis 4, wobei der erste Quantisierungsschritt aus einer vorbestimmten Tabelle von Quantisierungsschritten für Werte des Quantisierungsparameters erhalten wird.

8. Verfahren nach einem der Ansprüche 1 bis 4, wobei der Quantisierungsparameter einem Lagrange-Multiplikator $\lambda$ entspricht, der verwendet wird, um eine Funktion D + A * R zu optimieren, wobei R dem Durchsatz des Datenstroms entspricht und D der zugeordneten Verzerrung des decodierten Bildes entspricht.

9. Verfahren nach einem der Ansprüche 1 bis 4, wobei der Quantisierungsparameter im Datenstrom codiert oder aus dem Datenstrom decodiert wird.

10. Verfahren zur Decodierung nach einem der Ansprüche 1 bis 2, wobei die Decodierung des aktuellen Blocks gemäß dem zweiten Codiermodus außerdem umfasst:

- die Decodierung eines anderen Prädiktionsrestes, der dem aktuellen Block zugeordnet ist,
- die Dequantisierung des anderen Prädiktionsrestes, der dem aktuellen Block zugeordnet ist, mithilfe des ersten Quantisierungsschrittes,
- die Rekonstruktion des aktuellen Blocks aus den rekonstruierten Pixeln des aktuellen Blocks und dem anderen dequantisierten Prädiktionsrest.

11. Vorrichtung zur Decodierung eines Stroms codierter Daten, der für mindestens ein Bild repräsentativ ist, wobei das Bild in Blöcke unterteilt ist, wobei die Vorrichtung zur Decodierung einen Prozessor (PROCO) umfasst, der dafür ausgelegt ist, für mindestens einen Block des Bildes, aktueller Block genannt:

- eine Information zu decodieren, die einen Codiermodus des aktuellen Blocks angibt, wobei ein Prädiktionsrest, der dem aktuellen Block zugeordnet ist und aus einer räumlichen Prädiktion resultiert, gemäß einem ersten Codiermodus transformiert wird, um einen Block von transformierten Koeffizienten zu liefern, wobei der Block von transformierten Koeffizienten anschließend quantisiert wird, und gemäß einem zweiten Codiermodus direkt quantisiert wird, ohne eine Transformation zu erfahren,
- wenn der Codiermodus des aktuellen Blocks dem ersten Codiermodus entspricht, den aktuellen Block über die Bestimmung eines ersten Quantisierungsschrittes, um den dem aktuellen Block zugeordneten Prädiktionsrest in der transformierten Domäne zu dequantisieren, zu decodieren,
- wenn der Codiermodus des aktuellen Blocks dem zweiten Codiermodus entspricht, den aktuellen Block über die Bestimmung eines zweiten Quantisierungsschrittes, um den dem aktuellen Block zugeordneten Prädiktionsrest in der räumlichen Domäne zu dequantisieren, zu decodieren,
- wobei der erste Quantisierungsschritt und der zweite Quantisierungsschritt in Abhängigkeit von demselben Quantisierungsparameter bestimmt werden, und

wobei, wenn der Codiermodus des aktuellen Blocks dem zweiten Codiermodus entspricht, bei der Decodierung des aktuellen Blocks der Prozessor außerdem dafür ausgelegt ist, einen lokalen Prädiktor zu bestimmen, und dafür, für jedes Pixel des aktuellen Blocks:

- eine Prädiktion des Pixels aus dem lokalen Prädiktor und aus einem zuvor decodierten anderen Pixel zu gewinnen, wobei dieses zuvor decodierte andere Pixel dem aktuellen Block oder einem dem aktuellen Block benachbarten und zuvor decodierten Block des Bildes angehört, wenn sich das prädizierte Pixel auf der ersten Zeile und/oder der ersten Spalte des aktuellen Blocks befindet, das zuvor decodierte andere Pixel einem dem aktuellen Block benachbarten und zuvor decodierten Block des Bildes angehört, und andernfalls das zuvor decodierte andere Pixel dem aktuellen Block angehört,
- einen dem Pixel zugeordneten Prädiktionsrest zu decodieren,
- den dem Pixel zugeordneten Prädiktionsrest mithilfe des zweiten Quantisierungsschrittes zu dequantisieren,
- das Pixel durch Hinzufügung der Prädiktion des Pixels zu dem dequantisierten Prädiktionsrest zu rekonstruieren.

12. Vorrichtung zur Codierung eines Stroms codierter Daten, der für mindestens ein Bild repräsentativ ist, wobei das Bild in Blöcke unterteilt ist, wobei die Vorrichtung zur Codierung einen Prozessor (PROC) umfasst, der dafür ausgelegt ist, für mindestens einen Block des Bildes, aktueller Block genannt:

- eine Information zu codieren, die einen Codiermodus des aktuellen Blocks angibt, wobei ein Prädiktionsrest, der dem aktuellen Block zugeordnet ist und aus einer räumlichen Prädiktion resultiert, gemäß einem ersten Codiermodus transformiert wird, um einen Block von transformierten Koeffizienten zu liefern, wobei der Block von transformierten Koeffizienten anschließend quantisiert wird, und gemäß einem zweiten Codiermodus direkt quantisiert wird, ohne eine Transformation zu erfahren,
- wenn der Codiermodus des aktuellen Blocks dem ersten Codiermodus entspricht, den aktuellen Block über die Bestimmung eines ersten Quantisierungsschrittes, um den dem aktuellen Block zugeordneten Prädiktionsrest in der transformierten Domäne zu quantisieren, zu codieren,
- wenn der Codiermodus des aktuellen Blocks dem zweiten Codiermodus entspricht, den aktuellen Block über die Bestimmung eines zweiten Quantisierungsschrittes, um den dem aktuellen Block zugeordneten Prädiktionsrest in der räumlichen Domäne zu quantisieren, zu codieren,
- wobei der erste Quantisierungsschritt und der zweite Quantisierungsschritt in Abhängigkeit von demselben Quantisierungsparameter bestimmt werden, und

wobei, wenn der Codiermodus des aktuellen Blocks dem zweiten Codiermodus entspricht, bei der Codierung des aktuellen Blocks der Prozessor außerdem dafür ausgelegt ist, einen lokalen Prädiktor zu bestimmen, und dafür, für jedes Pixel des aktuellen Blocks:

- eine Prädiktion des Pixels aus dem lokalen Prädiktor und aus einem zuvor decodierten anderen Pixel zu gewinnen, wobei dieses zuvor decodierte andere Pixel dem aktuellen Block oder einem dem aktuellen Block benachbarten und zuvor decodierten Block des Bildes angehört, wenn sich das prädizierte Pixel auf der ersten Zeile und/oder der ersten Spalte des aktuellen Blocks befindet, das zuvor decodierte andere Pixel einem dem aktuellen Block benachbarten und zuvor decodierten Block des Bildes angehört, und andernfalls das zuvor decodierte andere Pixel dem aktuellen Block angehört,
- einen dem Pixel zugeordneten Prädiktionsrest aus der Prädiktion des Pixels zu gewinnen,
- den dem Pixel zugeordneten Prädiktionsrest mithilfe des zweiten Quantisierungsschrittes zu quantisieren,
- den quantisierten Prädiktionsrest zu codieren.

13. Computerprogramm, welches Anweisungen zur Durchführung des Verfahrens zur Decodierung nach einem der Ansprüche 1-2 oder 5 bis 10 oder des Verfahrens zur Codierung nach einem der Ansprüche 3 bis 9, wenn das Programm durch einen Prozessor ausgeführt wird, umfasst.

**Claims**

1. Method for decoding a stream of coded data which represents at least one frame, said frame being divided into blocks, the decoding method comprising, for at least one block of the frame, referred to as the current block:

- decoding (E42) information indicating a coding mode of the current block, in which a prediction residual associated with said current block and resulting from a spatial prediction is, in a first coding mode, transformed to deliver a block of transformed coefficients, said block of transformed coefficients then being quantized and, in a second coding mode, directly quantized without undergoing transform,
- when the coding mode of the current block is said first coding mode, decoding (E43) the current block, this comprising determining (E430) a first quantization step size for dequantizing, in the transform domain, said prediction residual associated with the current block,

- when the coding mode of the current block is said second coding mode, decoding (E44) the current block, this comprising determining (E441) a second quantization step size for dequantizing, in the spatial domain, said prediction residual associated with the current block,

- the first quantization step size and the second quantization step size being determined depending on the same quantization parameter, and

wherein, when the coding mode of the current block is the second coding mode, the decoding of the current block further comprises determining a local predictor and for each pixel of the current block:

- obtaining a prediction of said pixel from said local predictor and from another previously decoded pixel, said other previously decoded pixel belonging to said current block or to a block of the frame neighbouring said current block and previously decoded, when said predicted pixel is located on the first row and/or first column of said current block, said other previously decoded pixel belongs to a block of the frame neighbouring said current block and previously decoded, and otherwise said other previously decoded pixel belongs to said current block,

- decoding a prediction residual associated with said pixel,

- dequantizing said prediction residual associated with said pixel using said second quantization step size,

- reconstructing said pixel by adding the prediction of said pixel to the dequantized prediction residual.

2. Decoding method according to Claim 1, wherein the coefficients of the prediction residual associated with the current block, when the coding mode of the current block is the second coding mode, are decoded by an entropy decoder, which is used to decode the coefficients of the prediction residual associated with the current block, when the coding mode of the current block is the first coding mode.

3. Method for coding a stream of coded data that is representative of at least one frame, said frame being divided into blocks, the coding method comprising, for at least one block of the frame, referred to as the current block:

- coding (E20) information indicating a coding mode of the current block, in which a prediction residual associated with said current block and resulting from a spatial prediction is, in a first coding mode, transformed to deliver a block of transformed coefficients, said block of transformed coefficients then being quantized and, in a second coding mode, directly quantized without undergoing transform,

- when the coding mode of the current block is said first coding mode, coding (E21) the current block, this comprising determining (E210) a first quantization step size for quantizing said prediction residual associated with the current block in the transform domain,

- when the coding mode of the current block is said second coding mode, coding (E22) the current block, this comprising determining (E221) a second quantization step size for quantizing said prediction residual associated with the current block in the spatial domain,

- the first quantization step size and the second quantization step size being determined depending on the same quantization parameter, and

wherein, when the coding mode of the current block is the second coding mode, the coding of the current block comprises determining a local predictor and for each pixel of the current block:

- obtaining a prediction of said pixel from said local predictor and from another previously decoded pixel, said other previously decoded pixel belonging to said current block or to a block of the frame neighbouring said current block and previously decoded, when said predicted pixel is located on the first row and/or first column of said current block, said other previously decoded pixel belongs to a block of the frame neighbouring said current block and previously decoded, and otherwise said other previously decoded pixel belongs to said current block,

- obtaining a prediction residual associated with said pixel from the prediction of said pixel,

- quantizing said prediction residual associated with said pixel using said second quantization step size,

- coding said quantized prediction residual.

4. Coding method according to Claim 3, wherein the coefficients of the prediction residual associated with the current block, when the coding mode of the current block is the second coding mode, are coded by an entropy coder, which is used to code the coefficients of the prediction residual associated with the current block, when the coding mode of the current block is the first coding mode.

**5.** Method according to any of Claims 1 to 4, wherein the second quantization step size is determined depending on the first quantization step size.

**6.** Method according to Claim 5, wherein the second quantization step size is determined by $a * \delta_1 + b$ or $c * \delta_1^2 + d * \delta_1 + e$, where $\delta_1$ is the first quantization step size, and a, b, c, d, e are predetermined parameters.

**7.** Method according to any of Claims 1 to 4, wherein the first quantization step size is obtained from a table of quantization step sizes that is predetermined for values of the quantization parameter.

**8.** Method according to any of Claims 1 to 4, wherein the quantization parameter is a Lagrangian $\lambda$ used to optimize a function $D + \lambda * R$ where R is the rate of the data stream and D is the distortion associated with the decoded frame.

**9.** Method according to any of Claims 1 to 4, wherein the quantization parameter is coded in the data stream or decoded from the data stream.

**10.** Decoding method according to either of Claims 1 and 2, wherein the decoding of the current block in the second coding mode further comprises:

- decoding another prediction residual associated with said current block,
- dequantizing said other prediction residual associated with said block using said first quantization step size,
- reconstructing said current block from the reconstructed pixels of the current block and from said dequantized other prediction residual.

**11.** Device for decoding a stream of coded data which represents at least one frame, said frame being divided into blocks, the decoding device comprising a processor (PROCO) configured to, for at least one block of the frame, referred to as the current block:

- decode information indicating a coding mode of the current block, in which a prediction residual associated with said current block and resulting from a spatial prediction is, in a first coding mode, transformed to deliver a block of transformed coefficients, said block of transformed coefficients then being quantized and, in a second coding mode, directly quantized without undergoing transform,
- when the coding mode of the current block is said first coding mode, decode the current block by determining a first quantization step size for dequantizing, in the transform domain, said prediction residual associated with the current block,
- when the coding mode of the current block corresponds to said second coding mode, decode the current block by determining a second quantization step size for dequantizing, in the spatial domain, said prediction residual associated with the current block,
- the first quantization step size and the second quantization step size being determined depending on the same quantization parameter, and

wherein when the coding mode of the current block is the second coding mode, when decoding the current block, the processor is further configured to determine a local predictor and, for each pixel of the current block, to:

- obtain a prediction of said pixel from said local predictor and from another previously decoded pixel, said other previously decoded pixel belonging to said current block or to a block of the frame neighbouring said current block and previously decoded, when said predicted pixel is located on the first row and/or first column of said current block, said other previously decoded pixel belongs to a block of the frame neighbouring said current block and previously decoded, and otherwise said other previously decoded pixel belongs to said current block,
- decode a prediction residual associated with said pixel,
- quantize said prediction residual associated with said pixel using said second quantization step size,
- reconstruct said pixel by adding the prediction of said pixel to the dequantized prediction residual.

**12.** Device for coding a stream of coded data which represents at least one frame, said frame being divided into blocks, the coding device comprising a processor (PROC) configured to, for at least one block of the frame, referred to as the current block:

- code information indicating a coding mode of the current block, in which a prediction residual associated with said current block and resulting from a spatial prediction is, in a first coding mode, transformed to deliver a block of transformed coefficients, said block of transformed coefficients then being quantized and, in a second coding mode, directly quantized without undergoing transform,
- when the coding mode of the current block is said first coding mode, coding the current block by determining a first quantization step size for quantizing said prediction residual associated with the current block in the transform domain,
- when the coding mode of the current block is said second coding mode, coding the current block by determining a second quantization step size for quantizing said prediction residual associated with the current block in the spatial domain,
- the first quantization step size and the second quantization step size being determined depending on the same quantization parameter, and

wherein when the coding mode of the current block is the second coding mode, when coding the current block, the processor is further configured to determine a local predictor and, for each pixel of the current block, to:

- obtain a prediction of said pixel from said local predictor and from another previously decoded pixel, said other previously decoded pixel belonging to said current block, or to a block of the frame neighbouring said current block and previously decoded, when said predicted pixel is located on the first row and/or first column of said current block, said other previously decoded pixel belongs to a block of the frame neighbouring said current block and previously decoded, and otherwise said other previously decoded pixel belongs to said current block,
- obtain a prediction residual associated with said pixel from the prediction of said pixel,
- quantize said prediction residual associated with said pixel using said second quantization step size,
- code said quantized prediction residual.

13. Computer program comprising instructions for implementing the decoding method according to any of Claims 1-2 or 5 to 10 or the coding method according to any of Claims 3 to 9, when said program is executed by a processor.

**Fig. 1**

STR

| $i_{MP}$ | $idx_{MPM}$ | $R_{TQ}$ |
|---|---|---|

| $A_b$ |
|---|
| $B_b$ | $X_b$ |

| QP | TY | $_{PL}^{M}$ | $R1_Q$ | $R2_{TQ}$ |
|---|---|---|---|---|

**Fig. 2**

**Fig. 5**

| | B | C | |
| | A | X | |

$X_b$

**Fig. 3**

**Fig. 4**

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9253508 B
- WO 2015049491 A1

- WO 2007079964 A1

**Littérature non-brevet citée dans la description**

- **MATTHIAS WIEN**. High Efficiency Video Coding, Coding Tools and Specification. *Signals and Communication Technology*, 2015

- Rate-distortion optimized quantization in HEVC: Performance limitations. **STANKOWSKI JAKUB et al.** 2015 PICTURE CODING SYMPOSIUM (PCS). IEEE, 31 May 2015, 85-89